(19) Europäisches Patentamt
European Patent Office
Office européen des brevets

(11) EP 1 412 438 B1

(12) **EUROPEAN PATENT SPECIFICATION**

(45) Date of publication and mention of the grant of the patent:
**28.05.2008 Bulletin 2008/22**

(21) Application number: **02737467.7**

(22) Date of filing: **10.06.2002**

(51) Int Cl.:
***C09D 11/00*** *(2006.01)* ***C09D 11/10*** *(2006.01)*

(86) International application number:
**PCT/US2002/018516**

(87) International publication number:
**WO 2003/010249 (06.02.2003 Gazette 2003/06)**

(54) **INK JET INK COMPOSITIONS CONTAINING FLUOROCHEMICAL SURFACTANTS**

TINTENSTRAHLTINTE ENTHALTEND FLUORCHEMISCHE TENSIDE

COMPOSITIONS D'ENCRE POUR IMPRESSION A JET D'ENCRE RENFERMANT DES TENSIOACTIFS FLUOROCHIMIQUES

(84) Designated Contracting States:
**AT BE CH CY DE DK ES FI FR GB GR IE IT LI LU MC NL PT SE TR**

(30) Priority: **23.07.2001 US 911279**

(43) Date of publication of application:
**28.04.2004 Bulletin 2004/18**

(73) Proprietor: **3M Innovative Properties Company**
**St. Paul, MN 55133-3427 (US)**

(72) Inventors:
- **YLITALO, Caroline M.**
**Saint Paul, MN 55133-3427 (US)**
- **THERY, Ronald K.**
**Saint Paul, MN 55133-3427 (US)**
- **SEVERANCE, Richard L.**
**Saint Paul, MN 55133-3427 (US)**

(74) Representative: **Vossius & Partner**
**Siebertstrasse 4**
**81675 München (DE)**

(56) References cited:

| | |
|---|---|
| **EP-A- 0 071 345** | **WO-A-01/30873** |
| **WO-A-01/32789** | **WO-A-99/07796** |
| **US-A- 3 787 351** | **US-A- 5 863 320** |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 412 438 B1

## Description

The present invention relates to ink compositions containing fluorinated surfactants, methods of printing using the ink compositions, and printed articles produced thereby.

Inks are widely used in a variety of printing and coating processes including, for example, offset, intaglio, rotogravure, ink jet, flexographic, screen, and spraying techniques.

Ink jet imaging techniques have become very popular in commercial and consumer applications. Ink jet printers operate by ejecting a fluid (for example, ink) onto a receiving substrate in controlled patterns of closely spaced ink droplets. By selectively regulating the pattern of ink droplets, ink jet printers can produce a wide variety of printed features, including text, graphics, images, holograms, and the like. Moreover, ink jet printers are capable of forming printed features on a wide variety of substrates, including not just flat films or sheets, but also three-dimensional objects as well.

Thermal ink jet printers and piezo ink jet printers are the two main types of ink jet systems in widespread use today. For both approaches, the jetted fluid must meet stringent performance requirements in order for the fluid to be appropriately jettable and for the resultant printed features to have the desired mechanical, chemical, visual, and durability characteristics. Further, successful ink jet inks must properly wet the surface of the substrate(s) on which they are to be printed. To achieve this, the surface tension of the ink is typically reduced by the addition of one or more surfactants. Fluorinated surfactants are among the most effective materials for this purpose.

One problem that plagues many surfactant-containing ink jet ink compositions and ink jet printers is foam generated within the ink jet ink composition upon agitation of the ink composition (for example, during handling or during printing). The presence of foam in an ink jet ink composition leads to undesirable print quality and printing performance (for example, dot gain, color density, etc.). Instead of ink being jetted onto a desired substrate, air contained in the foam passes into the print head, where it may cause the print head to malfunction resulting in image defects.

Silicone surfactants and defoamers have been employed to overcome the problem of foaming, but their use may create other problems such as slow drying and in some cases an oily surface film on the printed image, or phase separation on standing or storage of the bulk ink.

What is needed in the art is an ink composition that provides all required physical performance characteristics such as jettability, fast drying, storage stability, controlled dot gain, and image density. In addition, what is needed in the art is an ink composition, which is formulated to simultaneously reduce or eliminate the undesirable problems associated with foam in an ink jet ink composition.

The present invention addresses some of the difficulties and problems discussed above by the discovery of novel ink compositions having improved anti-foaming properties, as well as, exceptional print quality. The ink compositions possess desired properties, which enable the ink compositions to be printed onto a desired substrate using a variety of printing methods, especially including ink jet ink printing. The printed substrate possesses exceptional print quality using a variety of colorants including pigment and dye-based ink compositions.

Accordingly, the present invention is directed to ink jet ink compositions containing fluorinated surfactants. The ink compositions of the invention provide ink jet printing performance comparable to that achieved using prior fluorinated surfactants, but may also having a reduced tendency to foam when compared to prior fluorinated surfactants.

The present invention is further directed to a method of printing comprising ejecting an ink composition comprising a fluorinated surfactant from an ink jet print head onto a substrate, and imaged articles derived therefrom.

The present invention is directed to ink jet ink compositions containing fluorinated surfactants. The ink compositions provide ink jet printing performance comparable to that achieved using prior fluorinated surfactants, but may also having a reduced tendency to foam when compared to prior fluorinated surfactants.

These and other features and advantages of the present invention will become apparent after a review of the following detailed description of the disclosed embodiments and the appended claims.

The present invention is directed to novel ink compositions having improved printability and exceptional print quality. The ink compositions comprise one or more fluorinated surfactants, which may result in an ink composition having a desired degree of anti-foaming properties as measured by a Foam Stability Test (described below). The components of the ink compositions are selected and combined in such a way that the resulting ink composition (1) is ink jet printable, (2) produces exceptional print quality on a variety of printable substrates, and optionally (3) has desirable anti-foaming properties. The present invention is also directed to a method of printing an ink composition onto a substrate, wherein the ink composition results in exceptional printability and print quality. The present invention is further directed to printed articles of manufacture comprising a base substrate having thereon a printed image formed from an ink composition.

In a preferred embodiment, it has been discovered that one or more fluorinated surfactants may be combined with other components and incorporated into an ink composition to form an ink composition of the present invention having desired anti-foaming properties without the use of silicone-containing surfactants or defoamers. One method of measuring the anti-foaming properties of a given ink composition is by a Foam Stability Test described below. The Foam Stability Test measures the amount of foam in an ink composition relative to the amount of ink composition after subjecting

the ink composition to vigorous agitation until a peak foaming level is observed.

The Foam Stability Test value is calculated using the following formula:

$$\text{Foam Stability Test Value (\%)} = \frac{(H_{foam})}{(H_{ink})} \times 100$$

wherein $H_{foam}$ is the height of the foam layer formed on top of the ink composition layer measured 60 seconds after agitating the ink composition, and $H_{ink}$ is the height of the ink composition layer prior to agitation. For example, if a sample of an ink composition is placed in a vial and agitated until a peak foaming level is observed, and the foam layer height measures 1 cm at a time 60 seconds after agitating the ink composition and the ink composition layer height measures 4 cm prior to agitation, then the Foam Stability Test Value is 25% ((1 cm/4 cm) x 100).

The amount of foam in an agitated ink composition sample may vary depending on a number of factors including, but not limited to, the mixer/vibrator used, and the degree of mixing/vibrating (that is, the time of mixing) of the ink composition. However, it has been discovered that the total amount of foaming in a given agitated ink composition reaches a peak foaming level, which does not significantly change, once the sample is exposed to a minimum amount of agitation. Agitation using any number of commercially available mixers/vibrators for a period of thirty seconds easily reaches the above-described peak foaming level. Suitable commercially available mixers/vibrators include, but are not limited to, VORTEX MAXI MIX mixers, available from Barnstead and Termolyne (Dubuque, Iowa); and the VORTEX-GENIE 2 mixer, available from Macalaster Bicknell Company (New Haven, CT). Consequently, even though a particular mixer (that is, the VORTEX-GENIE 2 mixer, available from Macalaster Bicknell Company (New Haven, CT)) is used in the Foam Stability Test Method described below, it should be understood that any number of comparable mixers may be used to measure the Foam Stability Test value as described above.

The ink compositions of the present invention desirably have a Foam Stability Test value of less than about 30%. More desirably, the ink compositions of the present invention desirably have a Foam Stability Test value of less than about 25%. Even more desirably, the ink compositions of the present invention desirably have a Foam Stability Test value of less than about 20%. Even more desirably, the ink compositions of the present invention desirably have a Foam Stability Test value of less than about 15%. Even more desirably, the ink compositions of the present invention desirably have a Foam Stability Test value of less than about 10%.

The ink compositions of the present invention comprise a variety of ink composition components, which result in ink compositions capable of being printed by any printing method, including ink jet printing. A description of various ink composition components is given below.

### *I. Ink Composition Materials*

The ink jet ink compositions of the present invention comprises one or more fluorinated surfactants selected from formula I, II and III, one or more colorants and a vehicle. Further embodiments are disclosed in the dependent claims. The vehicle may be a carrier in which the colorant is dissolved or dispersed and may include remaining constituents of the ink including, but not limited to, humectants, colorant stabilizers, solvents, water, polymerizable materials, photoinitiators, gloss modifiers, slip modifiers, antifoaming agents, flow or other rheology control agents, waxes, oils, plasticizers, binders, antioxidants, fungicides, bactericides, organic and/or inorganic filler particles, leveling agents, opacifiers, antistatic agents, and the like.

### *A. Surfactants*

The ink compositions of the present invention comprise one or more fluorinated surfactants. Fluorinated surfactants useful in practice of the invention may include polymeric and/or non-polymeric surfactants. Desired fluorinated surfactants for use in the present invention include any fluorinated surfactant resulting in an ink composition having a Foam Stability Test Value of less than about 30%.

In one embodiment, fluorinated surfactants useful in practice of the invention may comprise a polymeric fluorinated surfactant having at least one monomeric unit of Formula I:

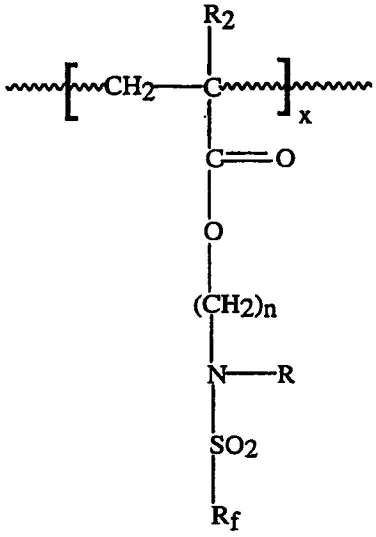

I

where $R_f$ is $-C_4F_9$ or $-C_3F_7$; R and $R_2$ are each independently hydrogen or alkyl of 1 to 4 carbon atoms; n is an integer from 2 to 10; and x is an integer of at least 1.

Preferred surfactants of Formula I are those where $R_f$ is $-C_4F_9$. Other preferred surfactants are those in which R and $R_2$ are each independently hydrogen or methyl and $R_f$ is $-C_4F_9$. Still other preferred embodiments include the surfactant of Formula I where n is 2.

Useful fluorinated polymeric surfactants desirably have at least one fluorochemical portion. In one preferred embodiment, the fluorochemical portion is a nonafluorobutanesulfonamido segment. The nonafluorobutanesulfonamido segments are combined with a reactive portion such as an acrylate or methacrylate group to form a polymerizable monomer. The polymerizable monomers may form homopolymers, for example, polyacrylates, polymethacrylates, polyalkyleneoxy polymers, or mixtures thereof, or be combined with other polymerizable monomers to form copolymers. Suitable polymerizable monomers include, but are not limited to, monomers disclosed in U.S. Patent No. 2,803,615. Exemplary monomers suitable for use in forming the polymeric surfactants of the present invention, include, but are not limited to, monomeric units derived from maleic anhydride, acrylonitrile, vinyl acetate, vinyl chloride, styrene, methyl acrylate, methyl methacrylate, ethylene, isoprene, butadiene, or combinations thereof.

In a further embodiment of the present invention, useful polymeric fluorinated surfactants are described by Formula II:

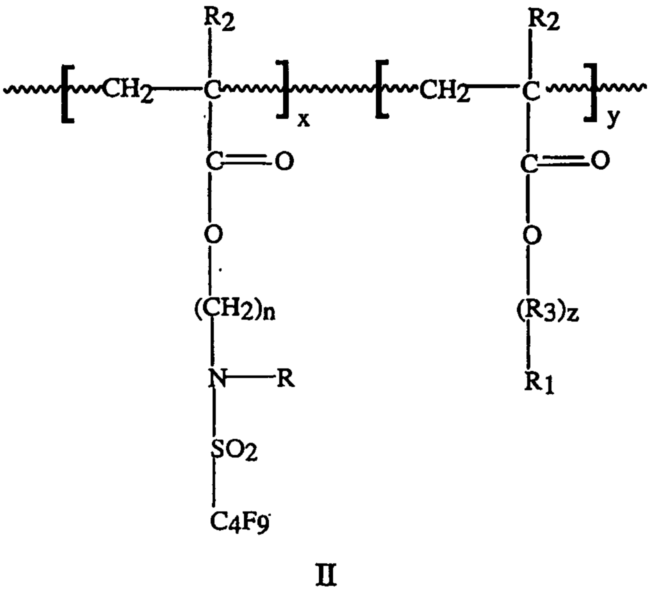

II

where the nonafluorobutanesulfonamido segment is part of a polymeric chain containing a polyalkyleneoxy moiety. R, $R_1$ and $R_2$ are each independently hydrogen or alkyl of 1 to 4 carbon atoms; $R_3$ comprises one or more straight or branched polyalkylene-oxy groups linked together (when more than one), having 2 to 6 carbon atoms in each group; n is an integer from 2 to 10; and x, y and z are integers of at least 1.

Preferred surfactants of Formula II are those where R, $R_1$, and $R_2$ are each independently hydrogen or methyl. Other preferred embodiments include the surfactant of Formula II where n is 2.

In one particular aspect of the surfactant of Formula II, the polyalkene oxide group, $R_3$ is of the Formulae A or B:

$$(EO)_p\text{-}(PO)_q\text{-}(EO)_p \qquad (A)$$

or

$$(PO)_q\text{-}(EO)_p\text{-}(PO)_q \qquad (B)$$

wherein "EO" represents one or more ethylene oxide moieties, "PO" represents one or more propylene oxide moieties, p is an integer of 1 to 128, and q is an integer of 0 to 54.

In one particularly preferred embodiment, $R_3$ in the surfactant of Formula II is a polyalkylene oxide group of Formula B, q is 0 and p is about 17. R and $R_1$ are methyl.

Alternatively, another preferred polymeric fluorinated surfactant is a copolymer where the polyalkyleneoxy moiety is derived from a polyalkylene oxide of Formula A where q is an integer of 9 to 22 and p is an integer of 14 to 128. More preferred is a copolymeric surfactant where the ethylene oxide moieties are on the outside of the block copolymer with propylene oxide moieties, p is an integer of 7 to 128, and q is an integer of 21 to 54. Most preferred is the copolymeric surfactant containing the moiety of Formula A where p is about 11 and q is about 21. In this particular embodiment, the copolymeric surfactant is that described in the above Formula II where R is methyl.

Preferred nonafluorobutanesulfonamido containing surfactants useful in the practice of the present invention are those in which a plurality of nonafluorobutanesulfonamido segments are linked to polyalkyleneoxy moieties through a polymeric chain. Polyalkyleneoxy moieties are particularly useful because they are soluble over a wide range of polarity and, by alteration of the carbon-oxygen ratio, can be tailored for any particular matrix. These copolymeric surfactants are generally non-ionic and are normally liquid or low melting solids. They are soluble in polar synthetic resinous compositions and have 5 to 30 weight percent, preferably 10 to 25 weight percent, carbon-bonded fluorine based on the weight of the copolymer.

As polyalkyleneoxy moieties, $R_3$ is at least one or more straight or branched alkyleneoxy groups having 2 to 6 carbon atoms in each group, preferably 2 to 4 carbon atoms, most preferably 2 or 3 carbon atoms such as ethyleneoxy or propyleneoxy. When ethyleneoxy and propyleneoxy units are linked together, they form polyethyleneoxy or polypropyleneoxy blocks or a mixture of blocks. The propyleneoxy units can be branched or linear. Particularly preferred of these are those containing one poly(oxypropylene) and having at least one other block of polyoxyethylene attached to the polyoxypropylene block. Additional blocks of polyoxyethylene or polyoxypropylene can be present in a molecule. These materials having an average molecular weight in the range of 500 to 15,000, are commonly available under the trade designation PLURONIC from BASF Corp. (Parsippany, NJ), and are available under a variety of other tradenames from other chemical suppliers. In addition, polymers having the trade designation PLURONIC R (reverse PLURONIC structure) are also useful in the invention.

Particularly useful polyoxypropylene polyoxyethylene block polymers are those comprising a center block of polyoxypropylene units and blocks of polyoxyethylene units to each side of the center block. These copolymers have the formula shown below:

$$(EO)_n\text{-}(PO)_m\text{-}(EO)_n$$

wherein m is an integer of 21 to 54 and n is an integer of 7 to 128.

Additional useful block copolymers are block polymers having a center block of polyoxyethylene units and blocks of polyoxypropylene units to each side of the center block. The copolymers have the formula as shown below:

$$(PO)_n\text{-}(EO)_m\text{-}(PO)_n$$

wherein m is an integer of 14 to 128 and n is an integer of 9 to 22.

Another preferred polyalkyleneoxy moiety useful in the co-polymers of the present invention containing a nonafluorobutanesulfonamido segment are those derived from polyethylene glycols having a molecular weight of 200 to 10,000. Suitable commercially available polyethylene glycols are available from Union Carbide under the trade designation CARBOWAX.

Another necessary part of the polymeric fluorinated surfactants according to Formulae I and II is acrylate and/or methacrylate moieties that form part of the starting monomers as well as the final polyacrylate products. Nonafluorobutanesulfonamido acrylate starting materials or monomers can be copolymerized with monomers containing polyalkyleneoxy moieties to form surface-active agents. Thus, the polyacrylate surfactants of the present invention can be prepared, for example, by free radical initiated copolymerization of a nonafluorobutanesulfonamido group-containing acrylate with a polyalkyleneoxy acrylate, for example, monoacrylate or diacrylate or mixtures thereof. Adjusting the concentration and activity of the initiator, the concentration of monomers, the temperature, and the chain-transfer agents can control the molecular weight of the polyacrylate copolymer. A description of the preparation of such polyacrylates is for example described in U.S. Patent No. 3,787,351. The starting nonafluorobutanesulfonamido acrylates described above are also known in the art, for example, U.S. Patent No. 2,803,615.

The polyalkyleneoxy acrylates used in the above preparation can be prepared from commercially available hydroxypolyethers or polyalkylene hydroxy compounds such as, for example, PLURONIC or CARBOWAX polymers. Such hydroxy materials are reacted in a known manner with acrylic acid, methacrylic acid, acryloyl chloride or acrylic anhydride. Alternatively, a polyalkyleneoxy diacrylate, prepared in a known manner similar to the monoacrylates, can be copolymerized with the nonafluorobutanesulfonamido group-containing acrylate to obtain a polyacrylate copolymer of the present invention.

The above polymeric surfactant may also contain, if desired, a water-solubilizing polar group that may be anionic, nonionic, cationic or amphoteric. Preferred anionic groups include, but are not limited to, sulfonates (for example, $-SO_3M$), sulfates (for example, $-OSO_3M$), and carboxylates (for example, -C(=O)OM). M is hydrogen, a metal cation such as an alkali or alkaline earth metal cation (for example, sodium, potassium, calcium or magnesium, and the like), or a nitrogen-based cation, such as, for example, ammonium or a protonated tertiary amine (for example, $(HOCH_2CH_2)_2N^{\oplus}HCH_3$). The sulfonate polar groups are employed as oligomers or polymers that include polyacrylates and polyacrylamides. A particularly useful monomer or oligomer employed in the present invention, if desired to provide water-solubilizing polar groups, is a polyacrylamide sulfonate of the formula:

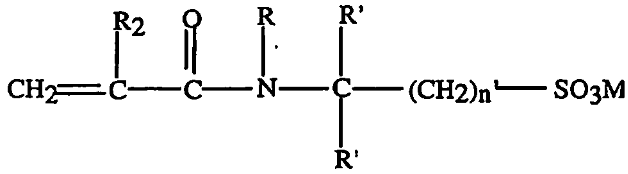

wherein

- $R_2$ and R are as defined above;
- R' is hydrogen, or alkyl of 1-4 carbon atoms, especially methyl;
- n' is an integer of 1 to 10, and
- M is hydrogen, a metal cation, or a protonated tertiary amine.

A preferred anionic group is 2-acrylamido-2-methyl-1-propanesulfonic acid (AMPS) or the potassium salt thereof.

Representative useful cationic water-solubilizing groups include, for example, ammonium or quaternary ammonium salts. Preferred monomers that provide cationic water-solubilizing groups include dimethylaminoethyl methacrylate, dimethylaminoethyl acrylate, and the like.

In another preferred embodiment, polymeric fluorinated surfactants may be prepared from the reaction product of the following monomers or oligomers:

(a) a compound of the formula:

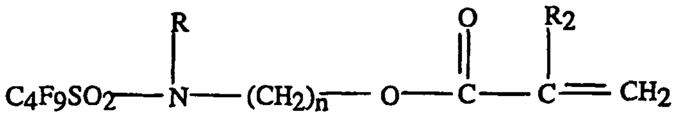
;

(b) a compound selected from the group consisting of

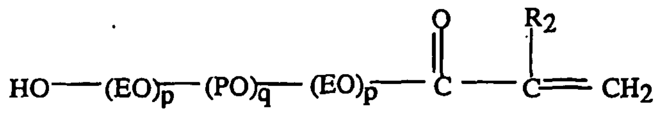
;

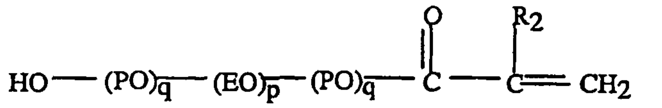
;

and

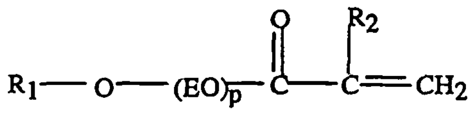
;

and optionally

(c) a compound of the formula:

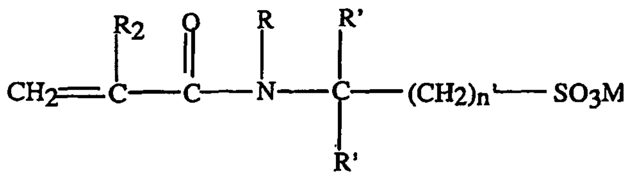

where R, $R_1$, R' and $R_2$ are each independently hydrogen or alkyl of 1 to 4 carbon atoms; n is an integer from 2 to 10; n' is an integer of 1 to 10; p is an integer of 1 to 128; and q is an integer of 0 to 54. M is hydrogen, a metal cation, or a protonated tertiary amine.

The compound containing the nonafluorobutanesulfonamido segment can also be used in a monomeric mixture form or mixture of monomers and polymers or copolymers.

In yet another embodiment, the fluorinated surfactant comprises a surfactant described by Formula III:

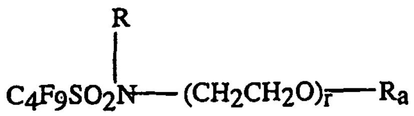

III

in which R and $R_a$ are independently hydrogen or alkyl of 1-4 carbon atoms and r is an integer of 2 to 20. Preferably, R and $Ra_1$ are methyl and r is an integer from 4 to 10.

In yet additional embodiments, the fluorinated surfactant is a mixture comprising one or more compounds according to Formula I, Formula II, and Formula III.

Nonafluorobutylsulfonamido-containing structures described above may be made with heptafluoropropylsulfonamido groups by starting with heptafluoropropylsulfonyl fluoride, which can be made by the methods described in Examples 2 and 3 of U.S. Patent No. 2,732,398 (Brice et al.). Using the methods described in the examples below, the heptafluoropropylsulfonyl fluoride can then be converted to N-methylheptafluoropropylsulfonamide, N-methylheptafluoropropylsulfonamidoethanol, $C_3F_7SO_2N(CH_3)(CH_2CH_2O)_{7.5}CH_3$, N-methyl-heptafluoropropylsulfonamidoethyl acrylate,

N-methyl-heptafluoropropylsulfonamidoethyl methacrylate, and the copolymers corresponding to those described with nonafluorobutylsulfonamido groups.

Additional description of synthetic methods and procedures for preparing fluorinated surfactants useful in practice of the invention are described in Assignee's co-pending PCT Publication No. WO 01/30873.

The amount of surfactant used in the ink compositions of the present invention is typically less than about 10 weight percent based on the total weight of the ink composition. Desirably, the surfactant is present in an amount of from 0.01 weight percent to 5 weight percent based on the total weight of the ink composition. More desirably, the surfactant is present in an amount of from 0.1 weight percent to 2 weight percent based on the total weight of the ink composition.

***B. Other Ink Composition Components***

In addition to the one or more surfactants described above, the ink compositions of the present invention may comprise one or more additional components such as a colorant, a dispersant, a solvent, a humectant, polymerizable materials, a photoinitiators, and one or more other additives such as colorant stabilizers, fragrances, rheology modifiers, fillers and the like. Exemplary ink composition components are discussed below.

***i. Colorants***

The ink compositions of the present invention may include one or more colorants. Suitable colorants include any known, commercially available pigments, dyes, or other color-providing material. The choice of colorant for use in the present invention depends on a number of factors including, but not limited to, the printing method used, and the end use of the ink composition and printed substrate having thereon the ink composition. For example, when the printing method is ink jet printing, a colorant that is capable of being ejected through an ink jet print head is needed.

In preferred embodiments of the present invention, the ink composition contains one or more pigments. Any known commercially available pigment may be used in the present invention as long as the pigment does not negatively impact the ink composition. Suitable dyes and pigments, which may be of any color, such as black, red, blue, and yellow dyes and pigments may be found, for example in, THE COLOUR INDEX, 3rd Ed. and revisions (vols. 1-9), Bradford, West Yorkshire, England, The Society of Dyers and Colourists, 1971-. As used herein the abbreviation "C.I." refers to "COLOUR INDEX".

Nonlimiting examples of black pigments include, but are not limited to, carbon black pigments such as SPECIAL BLACK 4, SPECIAL BLACK 5, SPECIAL 6, SPECIAL BLACK 4A, COLOR BLACK FW 200, and COLOR BLACK FW2 pigments, available from Degussa Corporation (Ridgefield, NJ); RAVEN 1200, RAVEN 1170, RAVEN 3500, and RAVEN 5750 carbon black pigments, available from Columbian Chemical Corp. (Atlanta, GA); MOGOL L and STERLING NS carbon black pigments, available from Cabot Corp. (Boston, MA); CARBON BLACK MA-100 pigment, which is available from Mitsubishi Kasei Corp. of Tokyo, Japan; and SUN UV FLEXO BLACK INK, a black pigment-containing UV-curable flexographic ink, available from Sun Chemical Co. (Fort Lee, NJ).

Nonlimiting examples of magenta pigments include, but are not limited to, QUINDO MAGENTA RV-6828 (C.I. Pigment Red 122,), QUINDO MAGENTA RV-6831 (C.I. Pigment Red 122) presscake, QUINDO RED R-6713 PV 19, and QUINDO MAGENTA RV-6843 (C.I. Pigment Red 202) pigments available from Bayer Corp. (Pittsburgh, PA); and SUNFAST MAGENTA 122 and SUNFAST MAGENTA 202 pigments available from Sun Chemical Corp. (Cincinnati, Ohio); and CINQUASIA MAGENTA B RT-343-D, a magenta pigment (C. I. Pigment Red 202) available from Ciba Specialty Chemicals of Basel, Switzerland (also known as MONASTRAL RED RT-343-D in the U.S).

Nonlimiting examples of cyan pigments include, but are not limited to, PALOMAR BLUE B-4810 (C.L Pigment Blue 15:3), PALOMAR BLUE B-4710 (C.L Pigment Blue 15:1) and PALOMAR BLUE B-4900 pigments, available from Bayer Corp. (Pittsburgh, PA); and SUN 249-1284 pigment (C.I. Pigment Blue 15:3), available from Sun Chemical Corp. (Cincinnati, OH).

Nonlimiting examples of yellow pigments include, but are not limited to, FANCHON FAST Y-5700 (C.I. Pigment Yellow 139) and FANCHON FAST YELLOW Y-5688 (C.I. Pigment Yellow 150) pigments, available from Bayer Corp. (Pittsburgh, PA); SUNBRITE YELLOW 14 presscake and SPECTRA PAC YELLOW 83 pigments, available from Sun Chemical Corp. (Cincinnati, OH); and IRGAZIN YELLOW 2RLT (C.I. Pigment Yellow 110), IRGAZIN YELLOW 2GLTN (C.I. Pigment Yellow 109), IRGAZIN YELLOW 2GLTE C.I. Pigment Yellow 109), and IRGAZIN YELLOW 3RLTN (C.I. Pigment Yellow 110) pigments, available from Ciba Specialty Chemicals (Basel, Switzerland).

In a further embodiment of the present invention, the ink composition contains one or more dyes. Any known commercially available dye may be used in the present invention as long as the dye does not negatively impact the anti-foaming properties of the ink composition. The dye, for example, may be an organic dye. Organic dye classes include, but are not limited to, triarylmethyl dyes, such as Malachite Green Carbinol base {4-(dimethylamino)-a-[4-(dimethylamino) phenyl]-a-[phenylbenzene-methanol}, Malachite Green Carbinol hydrochloride {N-4-[[4-(dimethylamino)phenyl]-phenylmethylene]-2,5-cyclohexyldien-1-ylidene]-N-methyl-methanaminium chloride or bis[p-(dimethylamino)phenyl]phenylmethylium chloride}, and Malachite Green oxalate {N-4-[[4-(dimethylamino)phenyl]phenylmethylene]-2,5-cyclohexyldien-1-ylidene]-N-methylmethanaminium chloride or bis[p-(dimethylamino)phenyl]phenylmethylium oxalate}; monoazo dyes, such as Cyanine Black, Chrysoidine [Basic Orange 2; 4-(phenylazo)-1,3-benzenediamine monohydrochloride], Victoria Pure Blue BO, Victoria Pure Blue B, basic fuschin and β-Naphthol Orange; thiazine dyes, such as Methylene Green, zinc chloride double salt [3,7-bis(dimethylamino)-6-nitrophenothiazin-5-ium chloride, zinc chloride double salt]; oxazine dyes, such as Lumichrome (7,8-dimethylalloxazine); naphthalimide dyes, such as Lucifer Yellow CH {6-amino-2-[(hydrazinocarbonyl)amino]-2,3-dihydro-1,3-dioxo-1H-benz[de]iso quinoline-5,8-disulfonic acid dilithium salt}; azine dyes, such as Janus Green B {3-(diethylamino)-7-[[4-(dimethylamino)phenyl]azo]-5-phenylphenazinium chloride}; cyanine dyes, such as Indocyanine Green {Cardio-Green or Fox Green; 2-[7-[1,3-dihydro-1,1-dimethyl-3-(4-sulfobutyl)-2H-benz[e]indol-2-ylidene] -1,3,5-heptatrienyl]-1,1-dimethyl-3-(4-sulfobutyl)-1H-benz[e]indolium hydroxide inner salt sodium salt}; indigo dyes, such as Indigo {Indigo Blue or C.I. Vat Blue 1; 2-(1,3-dihydro-3-oxo-2H-indol-2-ylidene)-1,2-dihydro-3H-indol-3-one}; coumarin dyes, such as 7-hydroxy-4-methylcoumarin (4-methylumbelliferone); benzimidazole dyes, such as Hoechst 33258 [bisbenzimide or 2-(4-hydroxyphenyl)-5-(4-methyl-1-piperazinyl)-2,5-bi-1H-benzimidazole trihydrochloride pentahydrate; Hoechst Celanese Corp. (Chester, SC)]; paraquinoidal dyes, such as hematoxylin {7,11b-dihydrobenz[b]indeno[1,2-d]pyran-3,4,6a,9,10(6H)-pentol}; fluorescein dyes, such as fluoresceinamine (5-aminofluorescein); diazonium salt dyes, such as Azoic Diazo No. 10 (2-methoxy-5-chlorobenzenediazonium chloride, zinc chloride double salt); azoic diazo dyes, such as Azoic Diazo No. 20 (4-benzoylamino-2,5-diethoxybenzene diazonium chloride, zinc chloride double salt); phenylenediamine dyes, such as C.I. Disperse Yellow 9 [N-(2,4-dinitrophenyl)-1,4-phenylenediamine or Solvent Orange 53]; diazo dyes, such as C.I. Disperse Orange 13 [1-phenylazo-4-(4-hydroxyphenylazo) naphthalene]; anthraquinone dyes, such as C.I. Disperse Blue 3 [1-methylamino-4-(2-hydroxyethylamino)-9,10-anthraquinone], C.I. Disperse Blue 14 [1,4-bis(methylamino)-9,10-anthraquinone], and C.I. Mordant Black 13; trisazo dyes, such as C.I. Direct Blue 71 (3-[(4-[(4-[(6-amino-1-hydroxy-3-sulfo-2-naphthalenyl)azo]-6-sulfo-1-naphthalenyl)azo]-1-naphthalenyl)azo]-1,5-naphthalenedisulfonic acid tetrasodium salt); xanthene dyes, such as 2,7-dichlorofluorescein; proflavine dyes, such as 3,6-diaminoacridine hemisulfate (Proflavine); sulfonaphthalein dyes, such as Cresol Red (o-cresolsulfonaphthalein); phthalocyanine dyes, such as Copper Phthalocyanine {Pigment Blue 15; (SP-4-1)-[29H,31H-phthalocyanato(2-)-$N^{29}$,$N^{30}$,$N^{31}$,$N^{32}$]copper); carotenoid dyes, such as trans-β-carotene (Food Orange 5); carminic acid dyes, such as Carmine, the aluminum or calcium-aluminum lake of carminic acid (7-a-D-glucopyranosyl-9,10-dihydro-3,5,6,8-tetrahydroxy-1-methyl-9,10-diox o-2-anthracenecarbonylic acid); azure dyes, such as Azure A [3-amino-7-(dimethylamino)phenothiazin-5-ium chloride or 7-(dimethylamino)-3-imino-3H-phenothiazine hydrochloride]; and acridine dyes, such as Acridine Orange [C.I. Basic Orange 14; 3,8-bis(dimethylamino)acridine hydrochloride, zinc chloride double salt] and Acriflavine (Acriflavine neutral; 3,6-diamino-10-methylacridinium chloride mixture with 3,6-acridinediamine).

The amount of colorant used in the ink compositions of the present invention is typically less than about 25 volume percent based on the total weight of the ink composition. Desirably, the colorant, when present, is present in an amount of from 0.1 volume percent to 15 volume percent based on the total weight of the ink composition. More desirably, the colorant, when present, is present in an amount of from 0.5 volume percent to 10 volume percent based on the total weight of the ink composition.

In some embodiments, as in the case of a ink jet printable radiation curable clear coat compositions comprising a fluorochemical surfactant, a vehicle comprising a polymerizable material, a photoinitiator, wherein each component is as described herein, a colorant is typically omitted.

### *ii. Dispersants*

Ink compositions of the present invention may employ ionic and nonionic dispersants in addition to the above-described surfactants. Nonlimiting examples of suitable dispersants include, but are not limited to, PLURONIC L62LF, PLURONIC L31, PLURONIC L92, and PLURONIC F68 dispersants, available from BASF Corp. (Parsippany, NJ); ANTAROX P-84 and ANTAROX P-1 04 dispersants, available from Rhodia, Inc. (Cranbury, NJ); POLY-TERGENT P-9E, POLY-TERGENT P-17D and POLY-TERGENT 2A1 dispersants, all of which are available from Olin Corp. (Norwalk, CT); AMPHOTERGE KJ-2 and AMPHOTERGE J-2 dispersants, both of which are available from Lonza, Ltd. (Basel, Switzerland); SOKALAN PA 30CL dispersant, which is available from BASF Corp. (Parsippany, NJ); SOLSPERSE 27000 dispersant, which is available from Zeneca Colors of (Charlotte, NC); CARBOWAX POLYETHYLENE GLYCOL 400, CARBOWAX POLYETHYLENE GLYCOL 600, CARBOWAX POLYETHYLENE GLYCOL 1000, CARBOWAX POLYETHYLENE GLYCOL 1450, and CARBOWAX POLYETHYLENE GLYCOL 3350 dispersants, available from Union Carbide Corp. of (Danbury, CT); and ACUSOL 445N, ACUSOL 450, and ACUSOL 480N dispersants, available from Rohm and Haas Co. (Philadelphia, PA).

Also useful as a dispersant is a reaction product of vinylazlactone and Bayer's aspartic ester, ring opened with amines followed by hydrolysis with a sodium hydroxide solution, such as disclosed in U.S. Patent Nos. 5,840,106 and

5,714,632.

The amount of dispersant used in the ink compositions of the present invention depends on the ink vehicle and the type, particle size and concentration of pigment that is present. For organic pigments the amount of dispersant used typically ranges from 10 to 100 parts by weight per 100 parts pigment that is present in the ink. For inorganic pigments the amount of dispersant used typically ranges from 5 to 80 parts by weight per 100 parts pigment that is present in the ink.

***iii. Solvents***

The ink compositions of the present invention may also comprise one or more solvents. Suitable solvents for use in the present invention may be aqueous or organic. Preferred solvents have a relatively high flash point of at least about 50 °C, preferably at least about 60 °C. Solvents, and the amounts in which they may be used, are selected such that they provide the necessary physical properties for the ink composition such as viscosity, elasticity and surface tension. For non-radiation curable inks the amount of solvent employed is preferably between 40 and 95 weight percent, more preferably between 60 and 95 weight percent based on the total weight of the ink composition. For radiation curable ink compositions, the solvent component is desirably absent. However, a small amount may be desirable under certain circumstances. In that case, the amount of solvent is preferably no more than about 20 weight percent, and more preferably between 2 and 10 weight percent based on the total weight of the ink composition.

A wide range of solvents may be incorporated into the ink compositions of the present invention. Representative examples include, but are not limited to, water; alcohols such as isopropyl alcohol (IPA) or ethanol; ketones such as methyl ethyl ketone, cyclohexanone, or acetone; aromatic hydrocarbons; isophorone; butyrolactone; N-methylpyrrolidone; tetrahydrofuran; esters such as lactates (for example, isopropyl lactate, ethylhexyl lactate, butyl lactate, etc.), acetates such as propylene glycol monomethyl ether acetate (PM Acetate), diethylene glycol ethyl ether acetate (DE Acetate), ethylene glycol butyl ether acetate (EB Acetate), dipropylene glycol monomethyl acetate (DPM Acetate), iso-alkyl esters, isohexyl acetate, isoheptyl acetate, isooctyl acetate, isononyl acetate, isodecyl acetate, isododecyl acetate, isotridecyl acetate; or other isoalkyl esters; combinations of these and the like.

***iv. Humectants***

A humectant may also be employed in aqueous ink compositions of the invention to help prevent the ink from drying out or crusting in the orifices of the print head. Examples of humectants suitable for use in the present invention include, but are not limited to, polyhydric alcohols, such as ethylene glycol, diethylene glycol, triethylene glycol, propylene glycol, tetraethylene glycol, polyethylene glycol, glycerol, 2-methyl-2,4-pentanediol 1,2,6-hexanetriol and thioglycol; lower alkyl mono- or di-ethers derived from alkylene glycols, such as ethylene glycol mono-methyl or mono-ethyl ether, diethylene glycol mono-methyl or mono-ethyl ether, propylene glycol mono-methyl or mono-ethyl ether, triethylene glycol mono-methyl or mono-ethyl ether, diethylene glycol dimethyl or diethyl ether, and diethylene glycol monobutyl ether; nitrogen-containing cyclic compounds, such as pyrrolidone, N-methyl-2-pyrrolidone, and 1,3-dimethyl-2-imidazolidinone; and sulfur-containing compounds such as dimethyl sulfoxide and tetramethylene sulfone. A desired humectant for use in the ink compositions of the present invention is diethylene glycol, glycerol, or diethylene glycol monobutyl ether.

The humectant may be present in any amount effective for the intended purpose. In general, the humectant, when present, is present in an amount of up to about 70 weight percent based on the total weight of the ink composition. Desirably, the humectant, when present, is present in an amount of from 5 weight percent to 30 weight percent based on the total weight of the ink composition.

***v. Polymerizable Materials***

The present invention also encompasses radiation curable ink compositions. In these ink compositions, one or more polymerizable or cross-linkable materials are present in combination with one or more photoinitiators. When printed and exposed to actinic radiation (that is, radiation having a wavelength in the ultraviolet or visible portion of the electromagnetic spectrum), the ink compositions rapidly cure forming a stable film coating. Suitable constituents may include one or more solvents, monomers, oligomers, and/or polymers. For ink jet printing applications, such materials, at least in combination, desirably exist as a fluid having an ink jettable viscosity at the desired ink jet print head temperature and shear conditions.

As used herein, the term "monomer" refers to a relatively low molecular weight material (that is, having a molecular weight less than about 500 g/mole) having one or more energy polymerizable groups. As used herein, the term "oligomer" refers to a relatively intermediate molecular weight material having a molecular weight of from 500 up to 10,000 g/mole. The term "molecular weight" as used throughout this specification means number average molecular weight unless expressly noted otherwise.

In the practice of the present invention, the monomer, oligomer, and/or polymer polymerizes and/or crosslinks

upon exposure to a suitable source of curing energy. Such functionality typically generally includes not only groups that cure via a cationic mechanism upon energy exposure, but also groups that cure via a free radical mechanism. Representative examples of curable groups suitable in the practice of the present invention include, but are not limited to, epoxy groups, (meth)acryloyl groups, alkenyl groups, allyloxy groups, styrenyl groups, (meth)acrylamido groups, cyanato groups, ethyleneoxy groups, combinations of these, and the like. Free radically polymerizable groups are desired. Of these, (meth)acryl moieties are more desired. It should be noted that as used herein and throughout the application, the term "(meth)acryl" or variations thereof refers to "acryl" and/or "methacryl."

The energy source used for achieving polymerization and/or crosslinking of the curable functionality may be actinic (for example, radiation having a wavelength in the ultraviolet or visible region of the spectrum), ionizing radiation, accelerated particles (for example, electron beam radiation), thermal (for example, heat or infrared radiation), or the like. Desirably, the energy is actinic radiation or accelerated particles, because such energy provides excellent control over the initiation and rate of polymerization and/or crosslinking. Additionally, actinic radiation and accelerated particles can be used for curing at relatively low temperatures. This avoids degrading or evaporating components that might be sensitive to the relatively high temperatures that might be required to initiate polymerization and/or crosslinking of the energy curable groups when using thermal curing techniques. Suitable sources of curing energy include lasers, electron beams, medium pressure mercury lamps, xenon lamps, carbon arc lamps, tungsten filament lamps, sunlight, low intensity ultraviolet light (for example, germicidal light), and the like. The use of black light for polymerization tends to form higher molecular weight polymers as compared to many other kinds of curing energy. Accordingly, when it is desired to form higher molecular weight materials upon curing, the use of ultraviolet light is desired.

The energy curable monomers generally may be mono-, di-, tri-, tetra- or otherwise multifunctional in terms of energy curable moieties. These monomers may function as diluents or solvents for the higher molecular weight constituent (s) (if any), as viscosity reducers, as binders when cured, and as crosslinking agents with respect to other energy curable materials. The amount of such monomers to be incorporated into the ink composition may vary within a wide range depending upon the intended use of the resultant ink composition. As general guidelines, the ink compositions of the present invention may contain from 25 weight percent to 98 weight percent of one or more monomers based on the total weight of the ink composition. Desirably, the ink composition of the present invention contains from 30 weight percent to 95 weight percent, more preferably from 40 weight percent to 70 weight percent, monomer or monomers based on the total weight of the ink composition.

Representative examples of monofunctional, energy curable monomers suitable for use in the ink compositions of the present invention include, but are not limited to, styrene, substituted styrenes (for example, $\alpha$-methylstyrene), vinyl esters, vinyl ethers, N-vinyl-2-pyrrolidone, (meth)acrylamide, N-substituted (meth)acrylamide, octyl (meth)acrylate, isooctyl (meth)acrylate, nonylphenol ethoxylate (meth)acrylate, isononyl (meth)acrylate, diethylene glycol (meth)acrylate, isobornyl (meth)acrylate, 2-(2-ethoxyethoxy)ethyl (meth)acrylate, 2-ethylhexyl (meth)acrylate, lauryl (meth)acrylate, butanediol mono(meth)acrylate, $\beta$-carboxyethyl (meth)acrylate, isobutyl (meth)acrylate, cycloaliphatic epoxide, $\alpha$-epoxide, 2-hydroxyethyl (meth)acrylate, (meth)acrylonitrile, maleic anhydride, itaconic acid, isodecyl (meth)acrylate, dodecyl (meth)acrylate, n-butyl (meth)acrylate, methyl (meth)acrylate, hexyl (meth)acrylate, (meth)acrylic acid, N-vinylcaprolactam, stearyl (meth)acrylate, hydroxy functional polycaprolactone ester (meth)acrylate, hydroxyethyl (meth)acrylate, hydroxymethyl (meth)acrylate, hydroxypropyl (meth)acrylate, hydroxyisopropyl (meth)acrylate, hydroxybutyl (meth)acrylate, hydroxyisobutyl (meth)acrylate, tetrahydrofurfuryl (meth)acrylate, combinations of these, and the like.

Multi-functional energy curable materials may also be incorporated into the ink composition to enhance one or more properties of a cured film formed from the ink composition, including crosslink density, hardness, tackiness, mar resistance, or the like. If one or more multi-functional species are present, the ink composition may comprise up to about 50 weight percent of such materials based on the total weight of the ink composition. Examples of such higher multifunctional, energy curable monomers include, but are not limited to, ethylene glycol di(meth)acrylate, hexanediol di(meth) acrylate, triethylene glycol di(meth)acrylate, tetraethylene glycol di(meth)acrylate, trimethylolpropane tri(meth)acrylate, ethoxylated trimethylolpropane tri(meth)acrylate, glycerol tri(meth)acrylate, pentaerythritol tri(meth)acrylate, pentaerythritol tetra(meth)acrylate, and neopentyl glycol di(meth)acrylate, combinations of these, and the like.

The total amount of polymerizable and/or crosslinkable multifunctional monomers and oligomers used in radiation curable ink compositions of the present invention is typically less than about 50 weight percent based on the total weight of the ink composition. Preferred multifunctional monomers and oligomers are di- or tri-functional, preferably in an amount of from 1 weight percent to 30 weight percent based on the total weight of the ink composition.

***vi. Photoinitiators***

In embodiments of the present invention wherein the ink composition is curable by exposure to actinic radiation, such as ultraviolet (UV) radiation, the ink composition may contain one or more photoinitiators. The type of photoinitiator used depends on the choice of colorant in the ink and on the wavelength of the radiation. Examples of suitable photoinitiators are listed in PCT Patent Publication WO 00/20521 A1 (4/13/2000, Adkins et al.). Commercially available free-radical generating photoinitiators suitable for use in the present invention include, but are not limited to, benzophenone, benzoin ether, acylphosphine oxide photoinitiators such as those sold under the trade designations IRGACURE and DAROCUR from Ciba Specialty Chemicals Corp. (Tarrytown, NY). In some cases, the colorant in the ink composition may absorb part of the incident radiation, depleting the available energy to activate the photoinitiator(s). This can slow down the curing rate and may result in poor through and/or surface cure of the applied ink. It is therefore desirable in some cases to use a mixture of photoinitiators in order to provide both surface and through cure.

In addition to, or as an alternative to, photoinitiators, other types of initiators may be used. For example, useful cationic photoinitiators comprising onium salts have the general structure A-X wherein A is desirably an organic cation selected from diazonium, iodonium, and sulfonium cations, more desirably A is selected from diphenyliodonium, triphenylsulfonium and (phenylthiophenyl)diphenyl sulfonium; and X is an anion, the counterion of the onium salts in which X is an organic sulfonate, or halogenated metal or metalloid. Particularly useful onium salts include, but are not limited to, aryl diazonium salts, diaryliodonium salts, and triarylsulfonium salts. Additional examples of the onium salts are described in U.S. Patent No. 5,086,086.

Thermal free-radical initiators useful in the present invention include, but are not limited to, azo, peroxide, and redox initiators. Suitable thermal initiators are to be chosen so as to not prematurely initiate the polymerization during storage, in the ink reservoir, or in the print head. Desirably, the activation temperature for the initiator is above the temperatures that the ink composition is exposed to during storage, in the ink reservoir and the print head. Once printed, the ink composition may be heated to the appropriate temperature to activate the initiator and trigger polymerization. Suitable azo initiators include, but are not limited to, 2,2'-azobis(isobutyronitrile) (VAZO 64), 2,2'-azobis(2-methylbutyronitrile)(VAZO 67), 1,1'-azobis (1-cyclohexadecanecarbonitrile) (VAZO 88), available from DuPont Chemicals (Wilmington, DE).

Suitable peroxide initiators include, but are not limited to, benzoyl peroxide, lauroyl peroxide, and dicumyl peroxide. Suitable redox initiators include, but are not limited to, combinations of the above listed peroxides plus reducing amines such as tertiary amines and the like.

The amount of photoinitiator(s) or other initiator(s) used in the ink compositions of the present invention may vary depending on the other ink composition components. Typically, for colorant-containing ink compositions, the amount of photoinitiator(s) is up to about 15 weight percent based on the total weight of the ink composition. Desirably, for colorant-containing ink compositions, the amount of photoinitiator(s) is from 1 weight percent to 12 weight percent, and more preferably from 4 weight percent to 10 weight percent based on the total weight of the ink composition. Colorless inks may have lower photoinitiator concentrations.

### *vii. Other Components*

In addition to the surfactants and other ink components described above, the ink compositions of the present invention may also contain one or more additional components, depending upon the coating method used and the application of the ink composition. Examples of such additional components include, but are not limited to, charge carriers; stabilizers against thermal oxidation; viscoelastic properties modifiers; cross-linking agents; plasticizers; charge control additives such as a quaternary ammonium salt; flow control additives such as hydrophobic silica, zinc stearate, calcium stearate, lithium stearate, polyvinyl stearate, and polyethylene powders; fillers such as calcium carbonate, clay and talc; chelating agents; biocides; fungicides; corrosion inhibitors; pH buffers; penetrants; sequestering agents; and any other additive used by those having ordinary skill in the art. The identities and amounts of such additional components in the ink compositions of the present invention are well known to those of ordinary skill in the art.

## *II. Methods of Preparing Ink Compositions*

The ink compositions of the present invention may be made by any conventional method known in the art. Typically, the ink components are combined in a suitable vessel, and mixed until a desired degree of blending is obtained. Following mixing, one or more additional steps may be used to prepare the ink for use in a coating and/or printing method. Suitable steps include, but are not limited to, filtering the ink composition.

When the ink composition contains a pigment, conventional pigment dispersion techniques may be used to disperse the pigment. Current compounding technology for the processing of pigment dispersions employs numerous processing technologies. One such technology makes use of ultrasonic energy to achieve mixing and particle deflocculation. Another technology makes use of media mills, such as ball mills, sand mills or attritors. Media mills achieve acceptable pigment dispersions by subjecting the pigment mixture to high intensity microshearing and cascading, which breaks down agglomerations of the pigment particles. However, media mill processing systems often suffer from disadvantages including media wear product contamination. Additionally, if the flow rate in a media mill is raised beyond a certain level, the resulting grinding and dispersion becomes uneven, and much of the material leaves the system without being sufficiently processed.

Problems associated with media milling systems may be overcome, at least in part, using homogenizers and emulsifiers. These systems generally function by forcing a premix of solids and liquids to collide against a surface, or to collide against itself. Unfortunately such high pressure devices are considered to be unsuitable for processing pigment dispersions due to the abrasive nature of the pigment particles and the relatively large size of pigment agglomeration structures which can plug narrow gaps through which such systems force the mixture being treated. Such clogging can be avoided, at least in part, by filtration or preprocessing to reduce the size of pigment agglomerations and to ensure sufficient dispersion of the pigment prior to use of high pressure processing.

In still another processing method, the pigment dispersion may be forced through a series of small nozzles having diameters on the order of 150 micrometers to 1000 micrometers. Such systems must be able to withstand very high pressures at high fluid velocities. Three different configurations for such systems may be used: (1) a "wedge" configuration with orifices of decreasing diameter, (2) a "wedge" configuration within which the orifices have cavitation enhancement devices, and (3) an "impinging jet" configuration in which the dispersion stream is split into at least two elements, each stream is passed through an orifice to create a jet, and the jet streams are recombined by impinging them against each other. Each of these systems has been found to yield satisfactory results when processing water-based pigmented inks.

After the ink has been processed using either of the "wedge" configurations or the "impinging jet" configuration at a concentration of about 15 weight percent, it is preferably diluted with an additional amount of deionized water and diethylene glycol to produce a final ink concentration of about 4% concentration with a given diethylene glycol-to-water ratio. In the dilution step, the dispersion is mixed using a shear mixer (available, for example, from Silverson Machines Inc., (East Longmeadow, MA)) at moderate speed while water and diethylene glycol are sequentially added. The addition of diethylene glycol is carried out slowly to prevent flocculation of the dispersion.

Following the dilution step, the ink is filtered using, for example, a 5 micron WHATMAN POLYCAP 36 HD cartridge type filter (available from Arbor Technology, Ann Arbor, MI). A pump, such as a MASTERFLEX peristaltic pump (available from Bamant Co. (Barrington, IL)) can be used to feed the ink through the filter. A flow rate of about 120 mL per minute with a back pressure of about 3 psi (20 kPa) is desired.

### *III. Methods of Coating Ink Compositions Onto A Substrate*

The present invention is further directed to methods of coating an ink composition onto a substrate, wherein the ink composition possesses a desired degree of anti-foaming properties. Representative examples of coating techniques include, but are not limited to, screen printing, spraying, ink jet printing, gravure coating, knife coating, brushing, curtain coating, flexography, and the like.

In one embodiment of the present invention, the method of coating comprises ejecting an ink composition from an ink jet print head onto a desired substrate (that is, ink jet printing).

After printing, any solvents remaining may be dried (that is, removed) by forced air, and/or heat. Removal of solvent may be accomplished using IR lamps, convective ovens, and the like, or simply allowed to air dry at room temperature. In the case of radiation curable inks, when only a moderate amount of solvent is present, the solvent may be removed at the same time that radiation curing is carried out. Substantially simultaneously radiation curing and drying enhances the quality of curing as described in Assignee's co-pending U.S. Patent No. US 6 558 753 (Ylitalo et al.), filed on November 9, 2000.

In the case of radiation curable ink compositions, after being coated onto a substrate, the radiation curable ink compositions may be cured using a suitable fluence and type of curing energy. The amount of curing energy to be used for curing depends upon a number of factors, such as the amount and the type of reactants involved, the energy source, web speed, the distance from the energy source, and the thickness of the material to be cured. Generally, the rate of curing tends to increase with increased energy intensity. The rate of curing also may tend to increase with increasing amounts of catalyst and/or initiator being present in the composition. As general guidelines, actinic radiation typically involves a total energy exposure from 0.1 to 10 Joule/cm$^2$, and electron beam radiation typically involves a total energy exposure in the range from less than 1 to 100 megarads or more, desirably 1 to 10 megarads. Exposure times may be from less than 1 second up to 10 minutes or more. Radiation exposure may occur in air or in an inert atmosphere such as nitrogen or $CO_2$.

Ink jettable embodiments of the present invention tend to have sufficiently low viscosity properties, at least when being jetted through the nozzles of an ink jet print head, so that the fluid compositions advantageously may be applied to receiving substrates using ink jetting techniques. Desirably, at least while being jetted, ink compositions of the present invention have a viscosity of below about 30 mPa·s, more desirably below about 25 mPa·s, and even more desirably below about 20 mPa·s at the desired ink jetting temperature (that is, from ambient temperature up to about 80 °C) and shear conditions.

However, the optimum viscosity characteristics for a particular composition will depend upon the type of ink jet system that will be used to apply the composition onto the substrate. For example, for piezo ink jet applications, a typical

desired viscosity is 3 to 30 mPa·s at the print head temperature. Generally, this means that the fluid compositions desirably have a viscosity at 25 °C of up to about 50 mPa·s. Particularly desired embodiments of the ink compositions described herein tend to have viscosities in this range of from 10 to 16 mPa·s at moderate temperatures of 25 °C to 65 °C.

Such viscosity characteristics generally help to ensure that the ink composition will be jettable at the desired print head temperature. Due to potential volatility and reactivity of one or more constituents of the ink compositions, the fluid compositions desirably are jetted at temperatures no higher than about 80 °C, and more desirably no higher than about 55 °C.

Another desirable characteristic of ink jet ink compositions of the present invention is a moderate to low surface tension. Desirably, the ink compositions have a surface tension in the range of from 20 mN/m to 50 mN/m, more desirably in the range of from 22 mN/m to 40 mN/m at the print head operating temperature. These surface tensions may be readily achieved by use of the surfactants disclosed herein.

Ink compositions of the present invention also desirably have Newtonian or substantially Newtonian viscosity properties at least while being jetted at the jetting temperature and jetting shear conditions. A Newtonian fluid has a viscosity that is at least substantially independent of shear rate. As used herein, the viscosity of a fluid will be deemed to be substantially independent of shear rate, and hence at least substantially Newtonian, if the fluid has a power law index of 0.95 or greater. The power law index of a fluid is given by the expression

$$\eta = m\gamma^{n-1}$$

wherein $\eta$ is the shear viscosity, $\gamma$ is the shear rate in $s^{-1}$, m is a constant, and n is the power law index. The principles of the power law index are further described in "Rheology: Principles, Measurements, and Applications", New York, VCH, 1994, p. 85.

For ink jet applications, substantially Newtonian characteristics at least while being jetted are especially desired over non-Newtonian fluids that exhibit elastic behavior. Elasticity of a fluid tends to cause extension thickening behavior, which is known to prevent jetting of inks, even when the low viscosity requirement is satisfied. Another reason for using fluids with at least substantially Newtonian viscosity properties is that jetting is typically achieved at shear rates of approximately $1x10^6$ $s^{-1}$, while ink refill from the reservoir into the ink jet head channels takes place at 100-1000 $s^{-1}$. A highly elastic composition will have much higher viscosity at the refill rate than at the jetting rate. This tends to slow refill, compromising print head performance. Elasticity and its drawbacks can be avoided by formulating fluid compositions that exhibit little or no elasticity at the jetting temperature and shear conditions.

In a desired embodiment of the present invention, the method of coating advantageously utilizes an ink-jet printer to apply inks and form ink jetted features, for example, films or patterns, on a desired substrate. Various types of ink-jet printers are known including thermal ink jet printers, continuous ink jet printers, and piezoelectric ink jet printers (that is, piezo ink jet). Thermal ink jet printers and print heads are readily commercially available from printer manufacturers such as Hewlett-Packard Corp. of Palo Alto, California, USA; Lexmark International of Lexington, Kentucky, USA and others. Embodiments of ink jet printing devices with versatile printing capabilities are also described in Assignee's co-pending U.S. Patent No. US 2002 085054 (Tokie), filed December 29, 2000.

In order to improve the productivity of graphic article production, the method of the present invention desirably employs a piezoelectric ink-jet printer. Piezo ink jet print heads are commercially available from Trident International, Inc. (Brookfield, CT); U.S. Epson Inc. (Torrance, CA); Hitachi Data Systems Corp. (Santa Clara, CA); Xaar Ltd. (Cambridge, United Kingdom); Spectra, Inc. (Hanover, NY); Idanit Technologies, Ltd. (Rishon Le Zion, Israel); and others. Such print heads are used in piezo ink jet printers commercially available from Idanit Technologies, Ltd. (Rishon Le Zion, Israel); Raster Graphics, Inc. (San Jose, CA); VUTEk, Inc. (Meredith, NH); Olympus Optical Co. Ltd. (Tokyo, Japan), and others.

### *IV. Printed Substrates*

The present invention is also directed to printed articles of manufacture comprising a base substrate having printed thereon an image formed from an ink composition having a desired degree of anti-foaming properties. The ink compositions of the present invention may be applied in any suitable fashion onto a receiving base substrate such as wood, metal, paper, leather, woven or nonwoven fabrics, resin-coated paper, foil, polymer articles, polymer films, and the like. The ink compositions of the present invention may be used to form graphic elements, text items, continuous layers, bar codes, or other features.

Ink compositions of the present invention are highly compatible with both porous and nonporous substrates. The compatibility with nonporous materials allows these compositions to be applied onto a wide range of nonporous polymer films, including single and multilayer constructions comprising films of poly(vinyl chloride) (including vinyl, plasticized vinyl, reinforced vinyl and vinyl/acrylic blends), polybutylene terephthalate, polyethylene terephthalate, other polyester, acrylonitrile-butadiene-styrene copolymer, polystyrene, high impact polystyrene, polycarbonate, polyurethane, epoxy, polyimide (including copper and/or gold coated polyimide), polyamide, polymethyl (meth)acrylate, modified polyolefin, polyamideimide, polyacrylate, polyacrylamide, melamine resins, polyvinyl butyral and its copolymers, combinations of these, and the like. Examples of porous substrates include, but are not limited to, cellulosic substrates such as paper and cardboard, fabrics (including non-woven synthetic fabrics and papers), leather, microporous films, and the like. Non-limiting examples of useful applications for printed articles that may be prepared using inks and methods according to the invention include outdoor substrates such as signs, roadways, motor vehicle, boats, aircraft, furniture, equipment, and the like.

The present invention is described above and further illustrated below by way of examples, which are not to be construed in any way as imposing limitations upon the scope of the invention.

## EXAMPLES

The following examples and accompanying glossary were used to produce exemplary ink compositions of the present invention.

### Glossary

***Substrates:***

The following graphic substrates (Substrates A - H) used in the examples are commercially available from Minnesota Mining and Manufacturing Company of St. Paul, MN:

Substrate A is CONTROLTAC PLUS 180-10 GRAPHIC MARKING FILM, an adhesive backed vinyl film (51 micrometers thickness);
Substrate B is CONTROLTAC PLUS 160-30 GRAPHIC MARKING FILM, is a trade designation for an adhesive backed vinyl film (102 micrometers thickness);
Substrate C is SCOTCHLITE HIGH INTENSITY SHEETING 3870 retroreflective film;
Substrate D is SCOTCHLITE DIAMOND GRADE LDP REFLECTIVE SHEETING 3970 retroreflective film;
Substrate E is SCOTCHLITE PLUS 680 SERIES REFLECTIVE SHEETING WITH CONTROLTAC ADHESIVE (WHITE, 680-10);
Substrate F is CONTROLTAC PLUS GRAPHIC MARKING FILM WITH COMPLY PERFORMANCE 3540C (Screen Printing);
Substrate G is PANAFLEX AWNING AND SIGN FACING 931; and
Substrate H is PANAFLEX AWNING AND SIGN FACING 945.

***Ink Components or Precursors of Ink Components:***

"ACRYLOID A-11", which refers to a polymethyl methacrylate resin, is available from Rohm & Haas Co. (Philadelphia, PA).
"AMPS" refers to 2-acrylamido-2-methyl-1-propanesulfonic acid, available from Sigma-Aldrich Co. (Milwaukee, WI).
"FANCHON FAST Yellow Y-5688" is a yellow pigment available from Bayer Corp. (Pittsburgh, PA).
"FIRSTCURE BD-3" is a photoinitiator available from Chemfirst Fine Chemicals (Pascagoula, MS).
"CARBOWAX 350" refers to $HO(CH_2CH_2O)_{7.5}CH_3$, and is available from Union Carbide Corp. (Danbury, CT).
"CINQUASIA MAGENTA B RT-343-D", which refers to magenta pigment (C.I. PIGMENT RED 202), is available from Ciba Specialty Chemicals (Basel, Switzerland). In the U.S., the trade designation "MONASTRAL Red RT-343-D" is used.
"CW750 Acrylate" refers to $CH_3O(CH_2CH_2O)_{17}C(=O)CH=CH2$, prepared as in Example 17 of U.S. Patent No. 3,728,151.
"Diglyme" refers to 2-methoxyethyl ether, available from Sigma-Aldrich Co. (Milwaukee, WI).
"DOWFAX 8390", which refers to hexadecyl(sulfophenoxy)benzenesulfonic acid disodium salt, is commercially available from Dow Chemical. Co. (Midland, MI).
"DPM Acetate" used in the examples was CGS-80 SCOTCHCAL THINNER;
"EB acetate" used in the examples was CGS-50 SCOTCHCAL THINNER"; both are available from Minnesota Mining and Manufacturing Company (St. Paul, MN).

"FLUORAD FC-431" refers to a 50 weight percent mixture of fluoroaliphatic polymeric esters in ethyl acetate, "FLUORAD FC-430" refers to a fluorinated alkyl ester nonionic surfactant; both were obtained from Minnesota Mining and Manufacturing Company (St. Paul, MN).

"EBECRYL 284", which refers to an aliphatic urethane diacrylate diluted with 12% hexanediol diacrylate; "EBECRYL 8800", which refers to an aliphatic urethane acrylate diluted 10% with ethoxyethoxyethyl acrylate; "EBECRYL 80" and "EBECRYL 8 1 ", which each refer to amine modified low viscosity polyester acrylates; are each available from UCB Chemicals (Smyrna, GA).

"IRGACURE 819", which refers to bis(2,4,6-trimethylbenzoyl)phenylphosphine oxide; "IRGACURE 651", which refers to 2,2-dimethoxy-1,2-diphenylethan-1-one; and

"IRGACURE 369", which refers to 2-benzyl-2-dimethylamino-1-(4-morpholinophenyl)butan-1-one, are each available from Ciba Specialty Chemicals (Tarrytown, NY).

"Isopropylthioxanthone" refers to "SPEEDCURE ITX", available from Aceto Corp. (New Hyde Park, NY).

"MICROLITH C-K" is a black pigment chip available from Ciba Specialty Chemicals (Newport, DE).

"PBSF" refers to perfluoro-1-butanesulfonyl fluoride, available from Sigma-Aldrich Corp. (Milwaukee, WI).

"PL acrylate" refers to $HO(CH_2CH_2O)_{11}[CH(CH_3)CH_2O]_{21}(CH_2CH_2O)_{11}C(=O)CH=CH_2$, prepared as in Example 1 of U.S. Patent No. 3,787,351.

"SARTOMER SR 368", which refers to tris (2-hydroxyethyl)isocyanurate triacrylate; "SARTOMER CN 983", which refers to an aliphatic polyester based urethane diacrylate oligomer; "SARTOMER CN 371" refers to a difunctional amine coinitiator; tetrahydrofurfuryl acrylate; isobornyl acrylate; 2-(2-ethoxyethoxy)ethyl acrylate; 1,6-hexanediol diacrylate; isooctyl acrylate; benzophenone and N-vinylcaprolactam are commercially available from Sartomer Co. (Exton, PA).

"SF96-100" , which refers to a silicone-based surfactant, is available from GE Silicones (Waterford, NY).

"SOLSPERSE 5000" and "SOLSPERSE 32000", which refer to dispersants, are available from Zeneca Inc. of Wilmington, DE.

"STABAXOL I" refers to 2,2',6,6'-tetraisopropyldiphenyl carbodiimide available from Rhein Chemie Corp. (Trenton, NJ).

"SUN 249-1284 PIGMENT" refers to a cyan pigment (C.I. PIGMENT BLUE 15:3) and "SUN UV FLEXO BLACK INK" refers to a black UV-curable flexographic ink, each are available from Sun Chemical Co. (Fort Lee, NJ).

"T-4 Morpholine Adduct" was prepared as follows for use as a gloss promoting agent. A partial vacuum (approximately 25 inches water vacuum) was pulled on a clean 1-Liter flask having an addition buret and stirring rod attached. The flask was preheated to 37.8 °C. Tetraethylene glycol diacrylate (256 g) was added to the flask while mixing at a moderate rate (approximately 70 rpm). The liquid was allowed to come up to temperature. Morpholine (155 g) was added to the flask at such a rate that the temperature did not exceed 46.1 °C. The temperature control bath was set for 43.3 °C and the flask contents were mixed for 30 minutes. The vacuum on the flask was broken and the fluid reaction product (T-4 morpholine adduct) was decanted through a 25 micron filter into a container.

"TINUVIN 292" refers to a stabilizer (mixture of bis(1,2,2,6,6-pentamethyl-4-piperidinyl)-sebecate and 1-methyl-8-(1,2,2,6,6-pentamethyl-4-piperidinyl)-sebecate) available from Ciba Specialty Chemicals of Tarrytown, NY.

"UNIFLEX 312" refers to a plasticizer from Union Camp Corp. (Wayne, NJ).

"UVINOL 400"refers to a UV stabilizer from BASF Corp. (Parsippany, NJ).

"WITCO Mark V1923" refers to an organo Ca/Zn stabilizer available from Witco Corp. (Houston, TX).

Additional chemical materials not specifically listed above that are used in the examples are available from standard commercial vendors such as Sigma-Aldrich Chemical Co. (Milwaukee, WI).

***Ink Jet Printer Components:***

"XAAR JET XJ 128-200" refers to a 128 channel 200 dpi (78.7 dots/cm) piezo ink jet print head available from Xaar Limited (Cambridge, England), and was used in the following examples to print images at resolutions of 317 x 295 dpi (125 x 116 dots/cm).

***Test Methods:***

In the following examples these test methods were employed:

"Adhesion" was measured according to ASTM D 3359-95A "Standard Test Methods for Measuring Adhesion by Tape Test", Method B.

"Solid block density" (that is, color density) was measured using a GRETAG SPM-55 densitometer, available from Gretag-MacBeth AG (Regensdorf, Switzerland). The reported value is the average of three measurements.

"Dot size" was measured by optical microscopy. The reported value is the average of six measurements.

"Surface Tension" values refer to the static surface tension measured at room temperature. "Surface tension" measurements reported in EXAMPLE 7 and EXAMPLE 8 were made using a FISCHER SCIENTIFIC SURFACE TENSIOMETER MODEL 20 fitted with a 6 cm platinum ring (from Fisher Scientific Worldwide (Hampton, NH). All other surface tension measurements were made using a KRUSS TENSIOMETER MODEL K-10 fitted with a Wilhelmy plate from Kruss GmbH (Hamburg, Germany).

"Foam Stability Test" values were determined by placing an ink (10 mL) to be tested in a 6 dram clear glass vial (2.54 cm diameter, 5.1 cm length). The vial was tightly closed and placed on a VORTEX GENIE 2 mixer, available from Macalaster Bicknell Co. (New Haven, CT), and set at a maximum speed setting of 8. The ink was agitated for 30 seconds, then placed on the bench top and a stop watch was started. The foam height was measured and reported as a percentage of the initial height of the ink composition in the vial prior to agitation at one or more of the following times after agitation: 1, 5, 10, 30, and 60 minutes.

***Preparation of N-Methyl-Perfluorobutanesulfonamide (MeFBSA)***

N-Methyl-Perfluorobutanesulfonamide (MeFBSA) was prepared using the following reaction:

$$C_4F_9SO_2F + 2NH_2CH_3 \rightarrow C_4F_9SO_2NHCH_3 + N^+H_3CH_3\ F^-.$$

**CHARGES:**

A. 200 g PBSF (perfluorobutanesulfonyl fluoride) distilled (est. 95%, MW = 302, 190 g active = 0.63 mole).
B. 43 g $NH_2CH_3$ (MW = 31, 1.38 moles)
C. 300 ml water (2 times)
D. 300 ml 3% $H_2SO_4$
E. 300 ml water (3 times)

**PROCEDURE:**

1. In a 100 ml flask fitted with a -78 °C cold finger condenser, an overhead stirrer, thermocouple, and a plastic gas inlet tube, Charge A was added. The flask was placed in a water bath, and with stirring the gas addition (Charge B) was started.
2. After 10 minutes of gas addition, the temperature rose only 3 °C. The internal temperature was raised by the addition of warm water to the bath to 50 °C and the gas addition rate was increased.
3. The internal temperature was kept at 53-45 °C and the addition of Charge B took approximately 40 minutes. The batch was allowed to stir at room temperature overnight and was still a liquid in the morning.
4. In the morning, the batch was heated to 50 °C with a heating mantle. Charge C was added slowly to maintain the temperature. The batch was agitated for 15 minutes then allowed to split. The upper water layer was removed by vacuum decant (sucking off the top phase with the aspirator). This operation was repeated with an additional 300 ml of water.
5. After washing 2X with water, the batch was washed with Charge D, split and vacuum decanted.
6. The acid washed fluorochemical (FC) bottom layer was washed 3X with 300 ml of water, split and vacuum decanted each time.
7. After the third wash the unused openings in the flask were stopped up, and a vacuum pump was attached to the flask. With stirring and at 45 °C, the vacuum was slowly pulled on the flask to prevent spitting when residual water boils off too rapidly. The vacuum leveled off at 5 torr.
8. The batch was heated to 60 °C at 5 torr vacuum for 30 min then at 85 °C for 15 min. The batch was cooled to 45° and vacuum was broken.
9. The yellow liquid was poured out into a crystallizing dish and weighed. 181 g of material was isolated (theoretical = 197 g, yield = 181/197 = 92%). A thermocouple was inserted into the liquid. The liquid crystallized at 37 °C into a pale yellow solid.

***Preparation of $C_4F_9SO_2N(CH_3)(CH_2CH_2O)_{7.5}CH_3$ (Surfactant 1)***

A surfactant of the present invention, $C_4F_9SO_2N(CH_3)(CH_2CH_2O)_{7.5}CH_3$ (Surfactant 1), was prepared using the following reaction:

$$C_4F_9SO_2N(CH_3)H + KOH + Cl(CH_2CH_2O)_{7.5}CH_3 \rightarrow C_4F_9SO_2N(CH_3)(CH_2CH_2O)_{7.5}CH_3 + KCl + H_2O$$

**CHARGES:**

A. 50.7 g MeFBSA (0.162 moles)
B. 24.1 g potassium carbonate (0.1749 moles)
C. 63.7 g CW chloride (MW = 374.5, 0.170 g/mole)

CW chloride was prepared as follows. To CARBOWAX 350 (44 g, $HO(CH_2CH_2O)_{7.5}CH_3$) and SUPERCEL (0.4 g, silica drying agent) was added slowly thionyl chloride (18 g) at 70 °C with stirring. After addition, the stirring was continued for another hour at 70-75 °C. The excess thionyl chloride and the by-products ($SO_2$ and HCl) were then removed under vacuum with nitrogen gas bubbled in. The product, CW chloride, $Cl(CH_2CH_2O)_{7.5}$CH3, was then analyzed by FTIR for the unreacted OH group (usually < 0.5%).

D. 5 g diglyme
E. 200 ml water
F. 60 ml 2 weight percent NaCl

**PROCEDURE:**

1. Charges A, B, C and D were placed in a 1000 ml flask fitted with an overhead stirrer and a thermocouple, and heated with stirring at 120 °C overnight.
2. In the morning the batch was cooled to 40-50 °C and Charge E was added. The batch was stirred for 15 minutes and split.
3. The lower fluorochemical layer was washed with Charge F and split off.
4. The fluorochemical layer was hazy so it was filtered through a piece of filter paper into a weighed jar. A total of 83 g was isolated.

***Ethoxylation of MeFBSA with Ethylene Carbonate (Preparation of MeFBSE Alcohol)***

MeFBSE Alcohol was prepared using the following reaction mechanism: $C_4F_9SO_2NHCH_3 + (CH_2O)_2C = O + Na_2CO_3$ (cat) $\rightarrow C_4F_9SO_2N(CH_3)CH_2CH_2OH + CO_2$

**CHARGES:**

A. 100 g MeFBSA (MW = 313, 0.32 moles)
B. 2.8 g $Na_2CO_3$ (0.026 moles)
D1. 8 g ethylene carbonate (MW = 88) melted in oven at 50°C
D2. 8 g ethylene carbonate
D3. 8 g ethylene carbonate
D4. 10 g ethylene carbonate (total weight = 34 g, 0.38 moles)
E. 300 ml water
F. 300 ml water
G. 300 ml 3 weight percent sulfuric acid
H. 300 ml water
I. 300 ml water

J. 300 ml water

**PROCEDURE:**

1. Charges A and B were placed in a one liter 3-necked flask with an overhead stirrer, thermocouple, addition funnel, and reflux condenser.
2. The batch was heated to 60°C (140 °F) at which point the batch was molten and the stirring was begun. The setpoint was increased to 120 °C (248 °F).
3. When the batch reached 120 °C, Charge D1 was removed from the oven and transferred to the addition funnel. Charge D1 was then added slowly over a period of 10 minutes. Outgassing (carbon dioxide) was observed. Thirty minutes elapsed until the rate of outgassing was noticed to have diminished.
4. Charge D2 was then transferred to the addition funnel and added over a period of 5 minutes. After 25 minutes, the rate of outgassing had slowed and Charge D3 was added over a 5 minute period. After 30 minutes, Charge D4 was removed from the oven, added to the addition funnel and added to the batch over a 5 minute period.
5. The setpoint was reduced to 110 °C (230 °F) and allowed to stir overnight.
6. In the morning, the batch was cooled to 90 °C (194 °F) and the batch was sampled. GC analysis showed the material to be 96.1 % desired product and to contain no amide. Charge E was added. The batch was stirred for 30 minutes, allowed to split and the upper water phase was vacuum decanted off. The operation was repeated for Charge F at 63°C (145 °F).
7. After the water washes, the batch was agitated with Charge G for 30 minutes at 63 °C (145 °F), then was phase split, and vacuum decanted. The pH of the water layer was tested and found to be less than 2.
8. After the acid wash, the batch was washed with water charges H, I, and J successively at 63 °C (145 °F).
9. The batch was melted out of the flask into a bottle and allowed to solidify. A small amount of water on top of the solid was poured off, and the material in the jar was found to weigh 124 g.
10. The material was melted into a two-necked 500 ml flask. The melting point was found to be 57 °C (135 °F).
11. The material (113 g) was distilled at 5-7 torr Hg. 104 g (92% of undistilled material) distilled at a head temperature of 130-137 °C (266-279 °F) and a pot temperature of 136-152 °C (277-306 °F). Further increase of the pot temperature to 170 °C (338 °F) resulted in no further material distilling over.

***Preparation of MeFBSEA (N-Methyl-Perfluorobutanesulfonylethyl Acrylate***

N-Methyl-Perfluorobutanesulfonylethyl Acrylate (MeFBSEA) was prepared using the following reaction mechanism:

$C_4F_9SO_2N(CH_3)CH_2CH_2OH + CH_2{=}CHCO_2H$ + triflic acid ($CF_3SO_3H$) catalyst $\rightarrow C_4F_9SO_2N(CH_3)CH_2CH_2OC({=}O)CH{=}CH_2 + H_2O + CF_3SO_3H$

**CHARGES:**

A. 112 g MeFBSE alcohol ($C_4F_9SO_2N(CH_3)CH_2CH_2OH$, 0.313 moles)
B. 0.07 g phenothiazine
C. 0.11 MEHQ (methoxyhydroquinone)
D. 100 g Heptane
E. 27.5 g acrylic acid (0.38 moles)
F. 1 g anhydrous triflic acid
G. 300 g water
H. 300 g water

**PROCEDURE:**

1. Charges A, B, C, D, E and F were added to a 3-necked flask equipped with decanter assembly, overhead stirrer,

and a thermocouple under positive nitrogen pressure.

2. The flask was warmed to 60 °C and the stirring was begun. The batch was stirred at reflux which was initially at 96 °C and rose to 102 °C by the end of the reaction. The theoretical water that should be collected in the decanter was 6.3 ml. After 15 minutes of refluxing, 2 ml had collected. After 1 hour and 15 minutes, the reflux temperature was 99 °C and 5 ml had collected. After 5 hours and 15 minutes the reflux temperature was 102 °C and 5.4 ml was collected. A sample was withdrawn and GC analysis showed no unreacted alcohol, 92.6% desired product and 7.4% high boiler that is probably the Michael adduct with acrylic acid.

3. The batch was stripped atmospherically to the decanter until at 103 °C no more heptane collected there.

4. The batch was cooled to 64 °C and vacuum was slowly pulled. More heptane was stripped off until at 5 torr no more liquid was observed to be distilling off.

5. Vacuum was broken and Charge G was added. The batch was stirred at 64 °C for 15 minutes and the top layer was sucked off.

6. This operation was repeated with Charge H, then the batch was allowed to cool to room temperature at which point the product was a solid. The remaining water was poured off and the material was melted out of the container into a jar. The weight of the product was 125 g (theoretical 129 g). GC analysis showed the material to be 92.64% desired acrylate and 7.36% acrylic acid Michael adduct.

***Preparation of MeFBSEA (30%)/PLURONIC Acrylate (70%) Copolymer (Surfactant 2)***

Another surfactant of the present invention (Surfactant 2), a random copolymer of MeFBSEA (30%) and PL acrylate (70%), was prepared as follows.

**CHARGES:**

A. 152 g MeFBSEA
B. 711 g PLURONIC acrylate (50% solution in toluene)
C. 14 g 2,2'-azobisisobutyronitrile
D. 28 g 3-mercapto-1,2-propanediol
E. 750 g toluene

The charges above were added to a 5000 ml flask under positive nitrogen pressure. The batch was heated to 79 °C for 5.5 hours. The batch was stripped at 12-15 torr until the batch temperature reached 52 °C at which time little or no more solvent was observed to strip off. The batch was poured into jars and weighed and a total of 726 g of polymer was isolated.

***Preparation of MeFBSEA (30%)/CW750 Acrylate (65%)/AMPS (5%) Copolymer (Surfactant 3)***

A random copolymer surfactant of MeFBSEMA with CW750 acrylate, and acrylic acid was prepared. The following charges were added to a 1000 ml flask under positive nitrogen pressure:

A. 55 g MeFBSEMA, having the chemical structure, $(C_4F_9SO_2N(CH_3)CH_2CH_2OC(=O)C(CH_3)=CH_2$, and prepared according to the procedure for preparing MeFBSEA (N-methyl-perfluorobutanesulfonylethyl acrylate), but substituting an equimolar amount of methacrylic acid for acrylic acid.
B. 35 g CW750 acrylate
C. 10 g acrylic acid
D. 6 g t-butyl peroctoate (50% solids in mineral spirits)
E. 1 g mercaptopropanediol
F. 100 g ethyl acetate

The batch was heated to 79 °C for 8 hours. The solids content was found to be 48.1 percent by weight of the resulting polymer solution by evaporation of a small quantity.

**EXAMPLES 1-15**

***Preparation of Radiation Curable Cyan Ink Jet Inks***

A millbase (Cyan Millbase) was prepared by dissolving 25.4 parts SOLSPERSE 5000 and 10.2 parts SOLSPERSE 32000 in 41.5 parts tetrahydrofurfuryl acrylate. SUN 249-1284 cyan pigment (22.9 parts) was added to the solution and incorporated by mixing with a rotor-stator mixer. The dispersion was milled using a Netzsch Mini-Zeta bead mill (available from Netzsch Inc. of Exton, PA) using 0.5 mm zirconia media. The dispersion was processed for 70 minutes in the mill.

A fully formulated ink jet ink (Cyan Ink) was prepared by combining the following ingredients:

| | |
|---|---|
| 2 parts | benzophenone |
| 1 part | isopropylthioxanthone |
| 2 parts | IRGACURE 369 |
| 2 parts | IRGACURE 651 |
| 5 parts | IRGACURE 819 |
| 3 parts | T-4 Morpholine Adduct |
| 0.9 parts | STABAXOL I |
| 2 parts | TINUVIN 292 |
| 5 parts | N-vinylcaprolactam |
| 5 parts | 1,6-hexanediol diacrylate |
| 24.1 parts | isooctyl acrylate |
| 7 parts | isobornyl acrylate |
| 6 parts | 2-ethoxyethoxyethyl acrylate |
| 6 parts | tetrahydrofurfuryl acrylate |
| 9 parts | SARTOMER CN983 |
| 4.0 parts | EBECRYL 81 |
| 1.5 parts | EBECRYL 80 |
| 5 parts | SARTOMER SR368 |
| 9 parts | Cyan Millbase. |

Tables 1 and 2 below show the effect on surface tension of adding Surfactants 2 and 3, respectively, to the Cyan Ink formulation.

**Table 1.** Surface Tension of Cyan Ink Formulations Containing Surfactant 2

| Example | Weight Percent Surfactant 2 | Surface Tension (mN/m) |
|---|---|---|
| 1 (comparative) | 0.00 | 31.6 |
| 2 | 0.10 | 31.0 |
| 3 | 0.20 | 30.5 |
| 4 | 0.30 | 29.9 |
| 5 | 0.40 | 29.6 |
| 6 | 0.50 | 29.3 |
| 7 | 0.60 | 29.3 |
| 8 | 0.70 | 29.2 |
| 9 | 1.00 | 29.1 |
| 10 | 1.50 | 29.0 |
| 11 | 2.00 | 26.8 |
| 12 | 2.50 | 26.6 |
| 13 | 3.00 | 26.6 |

**Table 2.** Surface Tension of Cyan Ink Formulations Containing Surfactant 3

| Sample | Weight Percent Surfactant 3 | Surface Tension (mN/m) |
|---|---|---|
| 1 (comparative) | 0.00 | 31.6 |
| 14 | 0.10 | 26.8 |
| 15 | 0.20 | 25.6 |

**EXAMPLES 16-39**

***Preparation of Radiation Curable Yellow Ink Jet Inks***

A millbase (Yellow Millbase) was prepared by combining 40 parts "FANCHON FAST Yellow Y-5688" pigment, and 25 parts SOLSPERSE 32000 in 35 parts tetrahydrofurfuryl acrylate. The dispersion was milled using a Netzsch Mini-Zeta bead mill (available from Netzsch Inc. of Exton, PA) using 0.5 mm zirconia media. The dispersion was processed for 70 minutes in the mill.

A fully formulated ink jet ink (Yellow Ink) was prepared by combining the following ingredients:

| | |
|---|---|
| 2 parts | benzophenone |
| 1 part | isopropylthioxanthone |
| 2 parts | IRGACURE 369 |
| 2 parts | IRGACURE 651 |
| 5 parts | IRGACURE 819 |
| 3 parts | T-4 Morpholine Adduct |
| 0.9 parts | STABAXOL |
| 2 parts | TINUVIN 292 |
| 5 parts | N-vinylcaprolactam |
| 5 parts | 1,6-hexanediol diacrylate |
| 24.1 parts | isooctyl acrylate |
| 6 parts | isobornyl acrylate |
| 7.5 parts | 2-ethoxyethoxyethyl acrylate |
| 6 parts | tetrahydrofurfuryl acrylate |
| 10 parts | SARTOMER CN983 |
| 6 parts | EBECRYL 81 |
| 5 parts | SARTOMER SR368 |
| 7.5 parts | Yellow Millbase |

Tables 3 and 4 below show the effect on surface tension of adding Surfactants 2 and 3, respectively, to the Yellow Ink formulation.

**Table 3.** Surface Tension of Yellow Ink Formulations Containing Surfactant 3

| Example | Weight Percent Surfactant 3 | Surface Tension (mN/m) |
|---|---|---|
| 16 (comparative) | 0.00 | 30.8 |
| 17 | 0.02 | 25.2 |
| 18 | 0.04 | 25.4 |
| 19 | 0.06 | 27.2 |
| 20 | 0.08 | 26.3 |
| 21 | 0.10 | 26.2 |
| 22 | 0.12 | 26.1 |
| 23 | 0.14 | 26.1 |

(continued)

| Example | Weight Percent Surfactant 3 | Surface Tension (mN/m) |
|---|---|---|
| 24 | 0.16 | 26.0 |
| 25 | 0.18 | 25.3 |
| 26 | 0.20 | 25.0 |

**Table 4.** Surface Tension of Yellow Ink FormulationsContaining Surfactant 1

| Example | Weight Percent Surfactant 1 | Surface Tension (mN/m) |
|---|---|---|
| 16 (comparative) | 0.00 | 30.8 |
| 27 | 0.05 | 30.0 |
| 28 | 0.10 | 29.9 |
| 29 | 0.20 | 28.8 |
| 30 | 0.30 | 29.3 |
| 31 | 0.40 | 29.2 |
| 32 | 0.50 | 29.2 |
| 33 | 0.60 | 29.2 |
| 34 | 0.70 | 29.2 |
| 35 | 1.00 | 29.0 |
| 36 | 1.50 | 28.5 |
| 37 | 2.00 | 28.4 |
| 38 | 2.50 | 28.4 |
| 39 | 3.00 | 28.3 |

**EXAMPLE 40**

***Preparation of Ink Coated Substrates***

Three ink compositions were individually jetted onto various substrates mounted on an x-y positionable platen using a XAAR JET XJ128-200 piezo ink jet print head. Test patterns in the form of solid fill squares, circles, and dots were printed. The three inks were: Cyan Ink having no surfactant (sample 1 (comparative), results shown in Table 5); Cyan Ink having 0.2 weight percent Surfactant 2 (sample 3, results shown in Table 6); and Cyan Ink having 0.2 weight percent Surfactant 3 (sample 15, results shown in Table 7). The inks were jetted using a XAAR XJ128-200 piezo print head at 317x 295 dpi (125 x 116 dots/cm) resolution, and cured using a Fusion Systems UV processor at 100% power (model MC6RQN equipped with H-type bulb, 240 mJ/cm$^2$ dose, Fusion UV Systems (Gaithersburg, MD). Printing performance results are given below in Tables 5-7.

**Table 5.** Printing Performance of Example 1 (comparative)(Cyan Ink Without Surfactant)

| Substrate | Adhesion | Solid Block Density | Dot size ($\mu$m) |
|---|---|---|---|
| A | 20% | 1.9 | 180 |
| C | 0% | 1.85 | 238 |
| D | 0% | 1.47 | 180 |
| E | 99% | 1.74 | 152 |
| F | 98% | 1.56 | 126 |
| G | 20% | 1.08 | 148 |

(continued)

| Substrate | Adhesion | Solid Block Density | Dot size (μm) |
|---|---|---|---|
| H | 90% | 1.68 | 160 |

**Table 6.** Printing Performance of Example 3(Cyan Ink Containing 0.2 weight percent Surfactant 2)

| Substrate | Adhesion | Solid Block Density | Dot size (μm) |
|---|---|---|---|
| A | 20% | 2.09 | 192 |
| C | 0% | 1.88 | 255 |
| D | 0% | 1.92 | 240 |
| E | 99% | 2.06 | 178 |
| F | 99% | 1.57 | 132 |
| G | 20% | 1.81 | 131 |
| H | 0% | 2.07 | 189 |

**Table 7.** Printing Performance of Example 15(Cyan Ink Containing 0.2 weight percent Surfactant 3)

| Substrate | Adhesion | Solid Block Density | Dot size (μm) |
|---|---|---|---|
| A | 90% | 2.34 | 196 |
| C | 0% | 1.92 | 264 |
| D | 0% | 1.94 | 255 |
| E | 99% | 2.14 | 169 |
| F | 98% | 1.77 | 152 |
| G | 20% | 1.95 | 157 |
| H | 99% | 2.23 | 202 |

Surfactant 2 and Surfactant 3 containing inks showed improved wetting and flow, as evidenced by increased color density and dot gain, when compared to the comparative on all the substrates examined. Neither surfactant compromised ink adhesion to the substrate.

**EXAMPLES 41-47**

***Preparation of Radiation Curable Magenta Ink Jet Inks***

A millbase (Magenta Millbase) was prepared by dispersing 33.3 parts CINQUASIA MAGENTA B RT-343-D pigment and 9.9 parts SOLSPERSE 32000 in 57.1 parts tetrahydrofurfuryl acrylate. The dispersion was milled using a Netzsch Mini-Zeta bead mill using 0.5 mm zirconia media. The dispersion was processed for 70 minutes in the mill.

A fully formulated ink jet ink (Magenta Ink) was prepared by combining the following ingredients:

| | |
|---|---|
| 4 parts | benzophenone |
| 1 part | isopropylthioxanthone |
| 2 parts | IRGACURE 369 |
| 5 parts | IRGACURE 819 |
| 0.9 parts | STABAXOL I |
| 2 parts | TINUVIN 292 |
| 10 parts | N-vinylcaprolactam |
| 5 parts | 1,6-hexanediol diacrylate |

(continued)

| | |
|---|---|
| 27.1 parts | isooctyl acrylate |
| 5 parts | isobornyl acrylate |
| 6 parts | 2-ethoxyethoxyethyl acrylate |
| 3 parts | SARTOMER CN983 |
| 5 parts | EBECRYL 80 |
| 4 parts | EBECRYL 284 |
| 20 parts | Magenta Millbase |

Several surfactants at different levels were added to the above-described ink. Surface tension was measured. Surface tension results are given below in Table 8.

**Table 8.** Surface Tension of Magenta Ink Formulations

| Example | Surfactant | Weight Percent Added Surfactant | Surface Tension (mN/m) |
|---|---|---|---|
| 41 (comparative) | None | 0 | 31.7 |
| 42 (comparative) | SF96-100 | 0.4 | 22.4 |
| 43 | Surfactant 2 | 0.4 | 30.4 |
| 44 | Surfactant 3 | 0.4 | 24.3 |
| 45 | Surfactant 1 | 0.2 | 30.6 |
| 46 | Surfactant 1 | 0.4 | 30.2 |
| 47 | Surfactant 1 | 0.8 | 30.4 |

All of the inks were jetted using a XAAR XJ128-200 piezo print head at 317x295 dpi (125 x 116 dots/cm). All inks were cured using a Fusion Systems UV processor at 100% power (model MC6RQN equipped with H-type bulb, 240 mJ/cm$^2$ dose). Printing performance results are given below in Table 9.

**Table 9.** Printing Performance of Magenta Ink Formulations

| Example | Substrate | Solid Block Density | Appearance |
|---|---|---|---|
| 41 (comparative) | C | 2.15 | poor |
| 42 (comparative) | " | 1.93 | poor |
| 43 | " | 2.01 | good |
| 44 | " | 2.25 | excellent |
| 45 | " | 1.96 | good |
| 41 (comparative) | F | 1.09 | poor |
| 42 (comparative) | " | 0.94 | poor |
| 43 | " | 1.82 | Fair |
| 44 | " | 1.09 | good |
| 45 | " | 1.36 | Fair |
| 41 (comparative) | G | 1.12 | Fair |
| 42 (comparative) | " | 1.13 | poor |
| 43 | " | 1.09 | Fair |
| 44 | " | 1.49 | good |
| 45 | " | 1.30 | Fair |
| 45 (comparative) | H | 1.34 | poor |

(continued)

| Example | Substrate | Solid Block Density | Appearance |
|---|---|---|---|
| 42 (comparative) | " | 1.42 | poor |
| 43 | " | 1.86 | good |
| 44 | " | 2.05 | excellent |
| 45 | " | 1.86 | Fair |

**EXAMPLE 48**

***Preparation of a Radiation Curable Clear Coat Containing Surfactant 3***

A clear ink formulation was prepared from the following components: 1.5 parts EBECRYL 8800, 1.5 parts SARTOMER CN 371, 5 parts isooctyl acrylate, 5 parts isobornyl acrylate, 5 parts N-vinylcaprolactam, 2 parts 1,6-hexanediol diacrylate, 1 part FIRSTCURE BD-3, and 0.08 parts Surfactant 3. All of the ingredients were mixed overnight by rolling. Surface tension of the formulation was measured using the plate method to be 26.8 mN/m, which is within the desirable range for piezo inkjet formulations.

**EXAMPLE 49**

***Preparation of a Cationically Photocurable Black Ink Jet Ink***

A black ink jet ink formulation was prepared by adding Surfactant 3 to cationically photocurable flexographic ink SUN UV FLEXO BLACK INK (0.4 weight percent) to produce Black Ink. Ink viscosity was 12.6 mPa·s at 25 °C. Surface tension values for the two inks were:

| | |
|---|---|
| Black Ink (Example 48) | 27.9 mN/m |
| SUN UV FLEXO BLACK INK | 36.9 mN/m |

Both inks were jetted onto various substrates, and cured as described in Examples 41-47. The printing performance results are shown in Table 10 below.

**Table 10.** Black Ink Printing Performance

| Ink | Substrate | Solid Block Density | Dot size (μm) |
|---|---|---|---|
| Example 49 | H | 1.28 | 168 |
| | G | 1.48 | 135 |
| | F | 1.91 | 140 |
| | E | 1.56 | 154 |
| | C | 2.22 | 240 |
| SUN UV FLEXO BLACK INK | H | 1.08 | 139 |
| | G | 1.10 | 118 |
| | F | 1.12 | 120 |
| | E | 0.94 | 123 |
| | C | 1.94 | 186 |

Example 49, which contained Surfactant 3 showed improved color density, wetting, flow and dot gain on all substrates when compared to the unmodified SUN UV FLEXO BLACK INK.

**EXAMPLE 50**

***Effect of Fluorinated Polymeric Surfactants on Foam Stability of Ink Jet Inks***

A magenta ink jet ink (Example 50, comparative) was prepared by adding 0.4 weight percent FC-431 FLUORAD COATING ADDITIVE to the Magenta Ink formulation of Example 41. The magenta ink jet inks of Examples 43,44,46 and 47 were also similarly prepared.

Each ink (10 g) was placed in a 6 dram clear glass vial (2.54 cm diameter, 5.1 cm length). The vials were shaken by hand vigorously for 5 seconds and then placed on the bench top. The height of the foam layer formed on top of each ink was measured as a function of time. The foam height was reported as a percentage of the height of the ink. The percentages are reported below (for example, if the foam layer height was 1 cm and the ink height was 4 cm, then the foam layer was 25% of the ink).

**Table 11.** Effect of Surfactant on Foam Stability of Ink Jet Inks

| Ink | Foam layer after 1 min | Foam layer After 5 min | Foam layer after 60 min |
|---|---|---|---|
| Example 50 (comparative) | 43 | 43 | 36 |
| Example 43 | 18 | 14 | 0 |
| Example 44 | 16 | 11 | 0 |
| Example 46 | 8 | 0 | 0 |
| Example 47 | 11 | 5 | 0 |

**EXAMPLES 51-52**

***Preparation of Aqueous Ink Jet Inks***

An aqueous ink jet ink was prepared by combining 38 parts deionized water, 10 parts diethylene glycol, and 2.5 parts of a magenta millbase (prepared by dispersing 69 parts CINQUASIA MAGENTA B RT-343-D, 15.5 parts DOWFAX 8390, and 15.5 parts water) in a glass jar and mixing on rollers overnight to give an aqueous magenta ink jet ink (Example 51, comparative). The surface tension of Example 51 (measured by the plate method) was 43.2 mN/m.

Aqueous magenta ink jet ink (Example 52) was prepared by adding 0.4 weight percent Surfactant 3 to the Example 51. The viscosity was 5.3 mPas·s and the surface tension was 27.9 mN/m.

Example 52 was jetted using the Xaar Jet print head as before onto plain paper. The printed image exhibited good appearance including color density, wetting and flow.

**EXAMPLES 53-54**

***Preparation of Solvent Based Ink Jet Inks***

Two black solvent based piezo ink jet inks were prepared: Example 53 (comparative) and Example 54. The composition of the two inks are given below:

Example 53 is a black ink jet ink prepared as described in Example 3 of U.S. Patent No. 6,113,679, and Example 54 is the same as Example 53 except FLUORAD FC-430 fluorinated surfactant and AF 9000 silicone oil with dispersed silica (available from GE Silicones of Waterfield, NY) were replaced with 0.1% Surfactant 3.

| Component | Example 52 | Example 53 |
|---|---|---|
| UNIFLEX312 | 1 part | 1 part |
| WITCO Mark V1923 | 0.04 parts | 0.04 parts |
| UVINOL 400 | 0.13 parts | 0.13 parts |
| TINUVIN 292 | 0.04 parts | 0.04 parts |
| EB Acetate | 44.9 parts | 44.9 parts |
| DPM Acetate | 25 parts | 25 parts |
| 20 weight percent ACRYLOID A-11 in EB Acetate | 6.91 parts | 6.91 parts |
| Black Paste (30% MICROLITH C-K black pigment chip in EB Acetate) | 21.68 parts | 21.68 parts |

(continued)

| Component | Example 52 | Example 53 |
|---|---|---|
| FLUORAD FC-430 | 0.25 parts | 0 parts |
| AF 9000 | 0.05 parts | 0 parts |
| Surfactant 3 | 0 parts | 0.1 parts |

Surface tension of Example 53 was 22.6 mN/m and the surface tension of Example 54 was 22.4 mN/m. Both inks were jetted onto various substrates. The printing performance results are shown in Table 12 below.

**Table 12.** Solvent Based Piezo Ink Jet Ink Printing Performance

| Ink | Substrate | Solid Block Density | Dot size (μm) |
|---|---|---|---|
| Example 53 | A | 2.12 | 183 |
| Example 53 | PANAFLEX AWNING AND SIGN FACING 945 | 2.05 | 172 |
| Example 53 | F | 1.71 | 135 |
| Example 53 | C | 2.49 | 181 |
| Example 53 | B | 1.75 | 155 |
| Example 54 | A | 2.28 | 184 |
| Example 54 | PANAFLEX AWNING AND SIGN FACING 945 | 2.08 | 171 |
| Example 54 | F | 1.80 | 128 |
| Example 54 | C | 2.49 | 197 |
| Example 54 | B | 1.63 | 152 |

## EXAMPLE 55

***Effect of Fluorinated Surfactants on Foam Stability of Solvent Based Ink Jet Inks***

A black solvent based ink jet ink (Example 55) was prepared as described in Example 54, except that 2.0 parts Surfactant 2 were added in place of 0.1 parts of Surfactant 3. Foam stability of Example 54 and Example 55 was evaluated as described in Example 50. Results are shown in See Table 13.

**Table 13.** Effect of Surfactant on Foam Stability of Solvent Based Ink Jet Inks

| Time (min) | Example 53 (%) | Example 54 (%) |
|---|---|---|
| 1 | 7 | 0 |
| 5 | 5 | 0 |
| 10 | 3 | 0 |
| 30 | 0 | 0 |

## EXAMPLE 56

***Effect of Fluorinated Surfactant on Foam Stability of UV Curable Ink Jet Inks***

Magenta UV curable ink was prepared as in Example 41. The ink was mixed with 0.2 weight percent surfactant as indicated in Table 14, and subjected to the foam stability test.

**Table 14.** Effect of Surfactant Type on Foam Stability of Magenta UV Curable Inks

| Time (minutes) | FLUORAD FC- 431 (comparative) | Surfactant 1 (0.2 wt %) | Surfactant 2 (0.2 wt %) | Surfactant 3 (0.2 wt %) |
|---|---|---|---|---|
| 1 | 42 | 14 | 14 | 25 |
| 5 | 37 | 0 | 9.5 | 14 |
| 10 | 30 | 0 | 0 | 4.5 |
| 30 | 25 | 0 | 0 | 0 |
| 60 | 25 | 0 | 0 | 0 |

**EXAMPLE 57**

***Effect of Fluorinated Surfactants on Foam Stability of Solvent Based Ink Jet Inks***

Black solvent based inks were prepared as described in Example 54, except that the surfactant was replaced with 0.2 weight percent of surfactant as indicated in Table 15, and subjected to the foam stability test.

**Table 15.** Effect of Surfactant of Foam Stability of Black Solvent Based Ink

| Time (minutes) | Surfactant 2 (0.2 wt %) | Surfactant 3 (0.2 wt %) |
|---|---|---|
| 1 | 0 | 24 |
| 5 | 0 | 19 |
| 10 | 0 | 19 |
| 30 | 0 | 14 |
| 60 | 0 | 4.3 |

**Claims**

**1.** An inkjet ink composition comprising:

a colorant;
a vehicle; and
a fluorochemical surfactant;

wherein the fluorochemical surfactant comprises one or more surfactants having one or more chemical structures selected from:

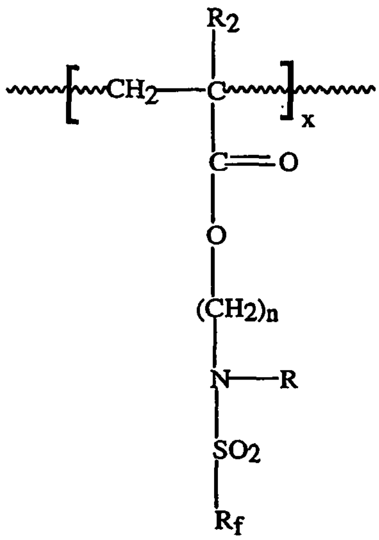

,

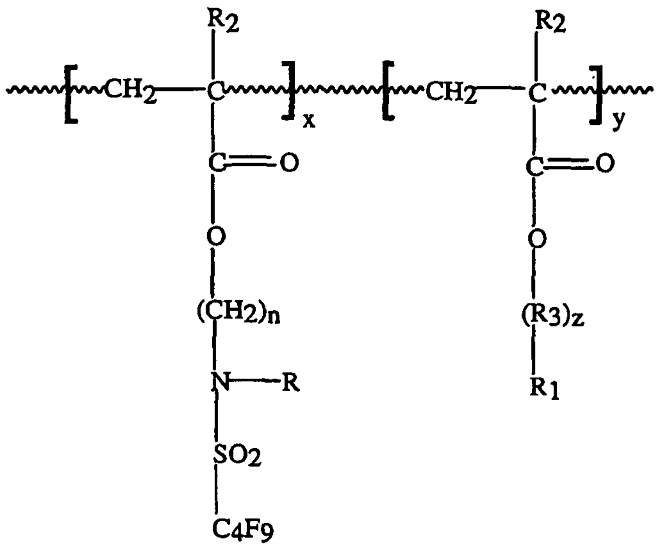

and

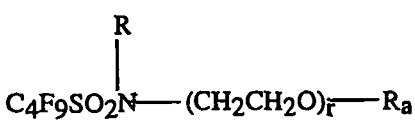

wherein

 represents a bond in a polymer chain;

$R_f$ is $-C_4F_9$ or $-C_3F_7$;

R, $R_1$, $R_2$ and $R_a$ are each independently hydrogen or alkyl groups having 1 to 4 carbon atoms;

$R_3$ comprises one or more straight or branched polyalkylene-oxy groups having 2 to 6 carbon atoms in each group;

n is an integer from 2 to 10;

x, y and z are integers of at least 1; and

r is an integer of 2 to 20.

2. The ink composition of Claim 1, wherein the fluorochemical surfactant comprises one or more polymeric surfactants having a polymer chain comprising one or more units:

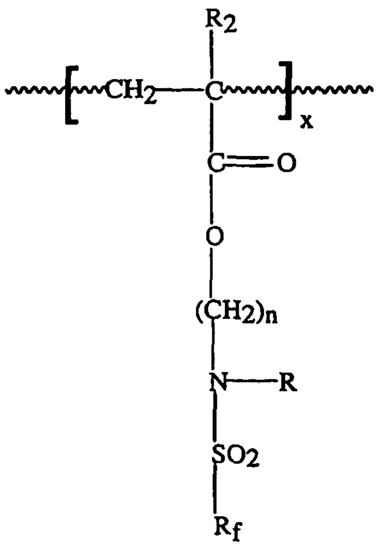

wherein

$R_f$ is $-C_4F_9$ or $-C_3F_7$;
R and $R_2$ are each independently hydrogen or alkyl groups having 1 to 4 carbon atoms;
n is an integer from 2 to 10; and
x is an integer of at least 1.

3. The ink composition of Claim 2, wherein
$R_f$ is $-C_4F_9$;
R and $R_2$ are each independently hydrogen or methyl groups; and
n is 2.

4. The ink composition of Claim 1, wherein the fluorochemical surfactant comprises one or more polymeric surfactants having a polymer chain comprising one or more units:

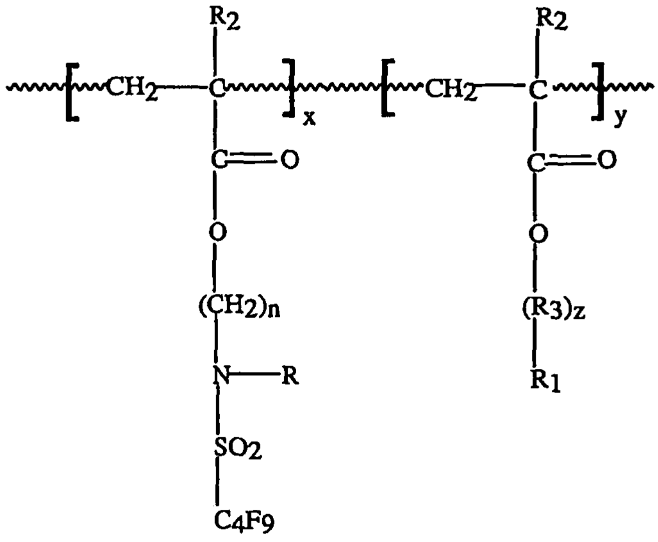

wherein

R, $R_1$ and $R_2$ are each independently hydrogen or alkyl groups having 1 to 4 carbon atoms;
$R_3$ comprises one or more straight or branched polyalkylene-oxy groups having 2 to 6 carbon atoms in each group;
n is an integer from 2 to 10; and
x, y and z are integers of at least 1.

5. The ink composition of Claim 4, wherein $R_3$ comprises

$$(EO)_p\text{-}(PO)_q\text{-}(EO)_p$$

or

$$(PO)_q\text{-}(EO)_p\text{-}(PO)_q$$

wherein p is an integer of 1 to 128 and q is an integer of 0 to 54.

6. The ink composition of Claim 5, wherein $R_3$ comprises

$$(PO)_q\text{-}(EO)_p\text{-}(PO)_q$$

wherein p is 17 and q is 0.

7. The ink composition of Claim 5, wherein $R_3$ comprises

$$(EO)_p\text{-}(PO)_q\text{-}(EO)_p$$

wherein p is an integer of 14 to 128 and q is an integer of 9 to 54.

8. The ink composition of Claim 5, wherein p is an integer of 7 to 128 and q is an integer of 21 to 54.

9. The ink composition of Claim 8, wherein p is 11 and q is 21.

10. The ink composition of Claim 9, wherein the polymer chain does not comprise any other monomeric units.

11. The ink composition of Claim 5, wherein the polymer chain further comprises units derived from maleic anhydride,

acrylonitrile, vinyl acetate, vinyl chloride, styrene, methyl acrylate, methyl methacrylate, ethylene, isoprene, butadiene, or combinations thereof.

**12.** The ink composition of Claim 1, wherein the fluorochemical surfactant comprises one or more surfactants having a chemical structure

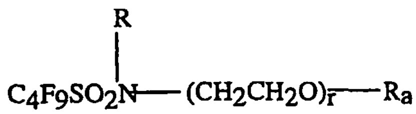

wherein

R and $R_a$ are each independently hydrogen or alkyl groups having 1 to 4 carbon atoms; and
r is an integer of 2 to 20.

**13.** The ink composition of Claim 12, wherein R and $R_a$ are each independently methyl and r is an integer from 4 to 10.

**14.** The ink composition of Claim 1, wherein the vehicle is nonaqueous.

**15.** The ink composition of Claim 1, wherein the vehicle comprises a polymerizable material.

**16.** The ink composition of Claim 15, wherein the polymerizable material is free-radically polymerizable.

**17.** The ink composition of Claim 16, wherein the free-radically polymerizable material comprises at least one of an acrylate monomer and an acrylate oligomer.

**18.** The ink composition of Claim 1, wherein the vehicle is aqueous.

**19.** The ink composition of Claim 18 further comprising at least one of a humectant, and a colorant stabilizer.

**20.** The ink composition of Claim 1, wherein the fluorochemical surfactant comprises a reaction product of:

(a) at least one compound having a formula

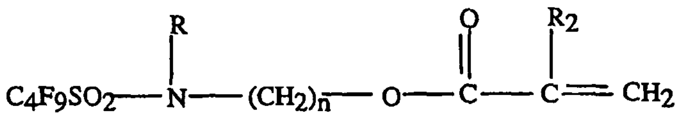 ;

(b) at least one compound selected from the group consisting of

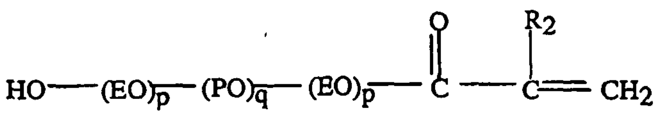 ;

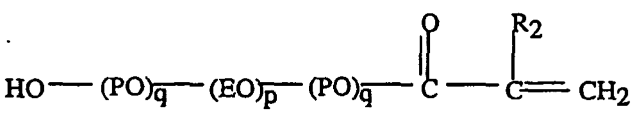 ;

and

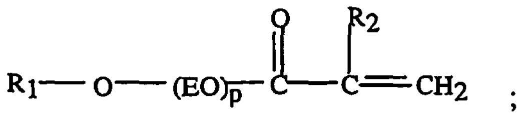

and optionally

(c) at least one compound having a formula

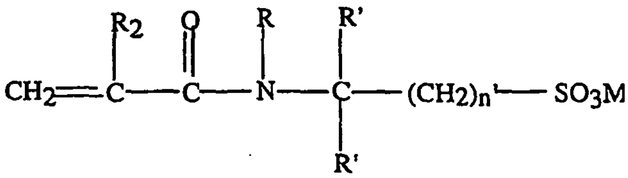

wherein

R, $R_1$, R' and $R_2$ are each independently hydrogen or an alkyl group having from 1 to 4 carbon atoms;
n is an integer from 2 to 10;
n' is an integer of 1 to 10;
p is an integer of 1 to 128;
q is an integer of 0 to 54; and
M is hydrogen, a metal cation, or a protonated tertiary amine.

**21.** The inkjet ink composition of Claim 1, wherein the ink composition has a Foam Stability Test value of less than 30%.

**22.** The inkjet ink composition of Claim 21, wherein the ink composition is free of silicone-containing surfactants and defoamers.

**23.** A method of ink jet printing comprising ejecting the ink composition of Claim 1 from an ink jet printer head onto a substrate.

**24.** The method of Claim 23 further comprising the step of exposing the printed ink to actinic radiation.

**25.** The method of Claim 24, wherein the actinic radiation comprises ultraviolet radiation.

**26.** An article of manufacture comprising a substrate printed according to the method of Claim 23.

**27.** The article of Claim 26, wherein the substrate comprises wood, metal, paper, woven fabric, nonwoven fabric, leather, resin-coated paper, foil, a foam, a polymer film, or a combination thereof.

**28.** The article of Claim 27, wherein the substrate comprises single and multilayer nonporous polymer films of poly(vinyl chloride), polybutylene terephthalate, polyethylene terephthalate, acrylonitrile-butadiene-styrene copolymer, polystyrene, polycarbonate, polyurethane, epoxy, polyimide, polyamide, polymethyl (meth)acrylate, polyolefin, polyamideimide, polyacrylate, polyacrylamide, melamine resins, polyvinyl butyral and copolymers thereof, and combinations thereof.

**29.** The article of Claim 27, wherein the substrate comprises single and multilayer constructions of paper, cardboard, non-woven fabric, woven fabric, leather, microporous film, and combinations thereof.

**30.** The article of Claim 26, wherein the article comprises a component for an outdoor sign, a roadway, a motor vehicle, a boat, an aircraft, or furniture.

**31.** The article of Claim 30, wherein the article comprises a retroreflective article.

**32.** The article of Claim 31, wherein the substrate comprises polymethyl methacrylate.

**33.** An ink jet printable radiation curable clear coat comprising:

a vehicle comprising a polymerizable material;
a photoinitiator; and
a fluorochemical surfactant;

wherein no colorant is present; and
further wherein the fluorochemical surfactant comprises one or more surfactants having one or more chemical structures selected from:

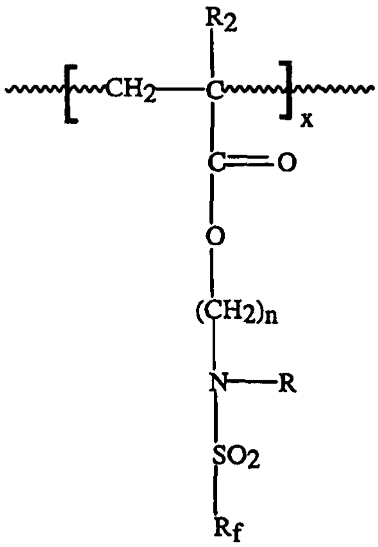

,

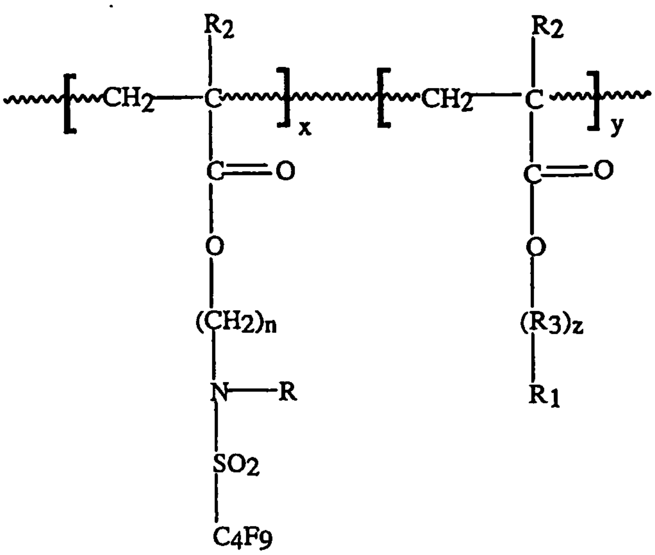

and

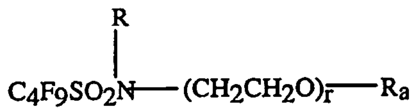

wherein

 represents a bond in a polymer chain;
$R_f$ is $-C_4F_9$ or $-C_3F_7$;
R, $R_1$, $R_2$ and $R_a$ are each independently hydrogen or alkyl groups having 1 to 4 carbon atoms;
$R_3$ comprises one or more straight or branched polyalkylene-oxy groups having 2 to 6 carbon atoms in each group;
n is an integer from 2 to 10;
x, y and z are integers of at least 1; and
r is an integer of 2 to 20.

## Patentansprüche

**1.** Tintenstrahltintenzusammensetzung, umfassend:

ein Farbmittel;
ein Vehikel; und
ein fluorchemisches Tensid;

wobei das fluorchemische Tensid ein oder mehrere Tenside umfasst, die eine oder mehrere chemische Strukturen aufweisen, ausgewählt unter:

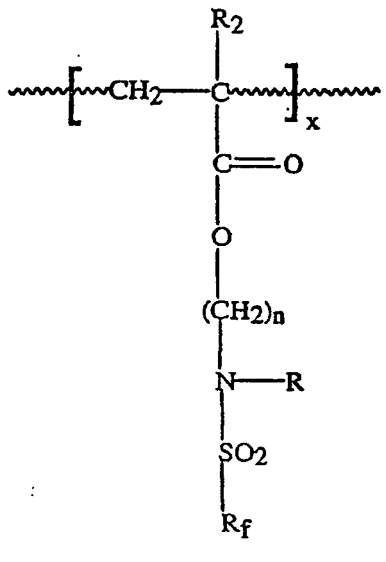

,

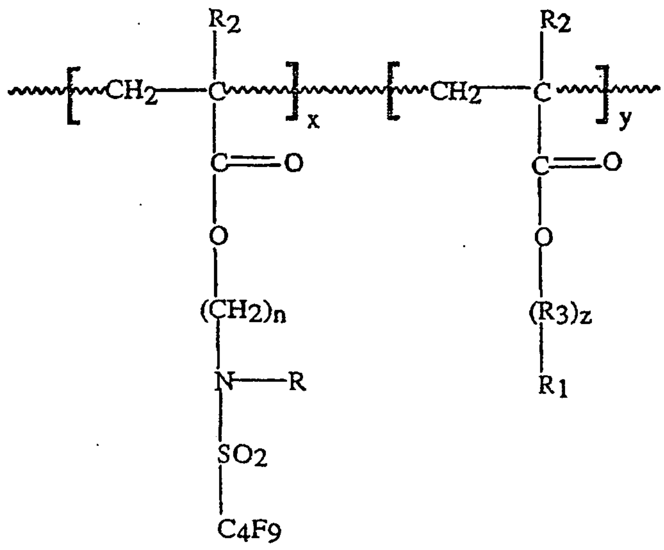

und

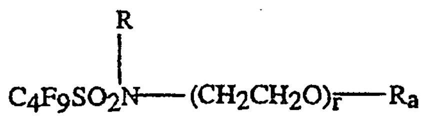

wobei

 eine Bindung in einer Polymerkette darstellt;
$R_f$ $-C_4F_9$ oder $-C_3F_7$ ist;
R, $R_1$, $R_2$ und $R_a$ jeweils unabhängig Wasserstoff- oder Alkylgruppen mit 1 bis 4 Kohlenstoffatomen sind;
$R_3$ eine oder mehrere geradkettige oder verzweigte Polyalkylenoxygruppen mit 2 bis 6 Kohlenstoffatomen in jeder Gruppe umfasst;
n eine ganze Zahl von 2 bis 10 ist;
x, y und z ganze Zahlen von mindestens 1 sind; und r eine ganze Zahl von 2 bis 20 ist.

**2.** Tintenzusammensetzung nach Anspruch 1, wobei das fluorchemische Tensid ein oder mehrere polymere Tenside umfasst, die eine Polymerkette aufweisen, die eine oder mehrere Einheiten:

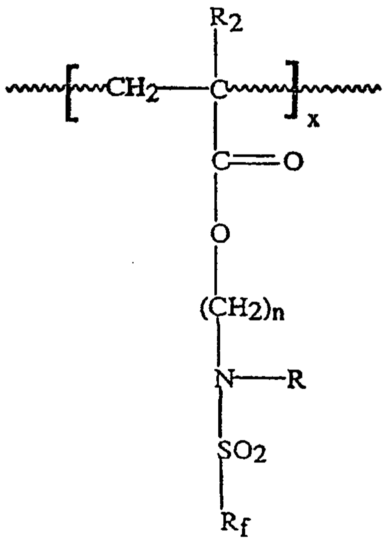

umfasst,
wobei

$R_f$ -$C_4F_9$ oder -$C_3F_7$ ist;
R und $R_2$ jeweils unabhängig Wasserstoff- oder Alkylgruppen mit 1 bis 4 Kohlenstoffatomen sind;
n eine ganze Zahl von 2 bis 10 ist; und
x eine ganze Zahl von mindestens 1 ist.

**3.** Tintenzusammensetzung nach Anspruch 2, wobei

$R_f$ -$C_4F_9$ ist;

R und $R_2$ jeweils unabhängig Wasserstoff- oder Methylgruppen sind; und
n 2 beträgt.

**4.** Tintenzusammensetzung nach Anspruch 1, wobei das fluorchemische Tensid ein oder mehrere polymere Tenside umfasst, die eine Polymerkette aufweisen, die eine oder mehrere Einheiten:

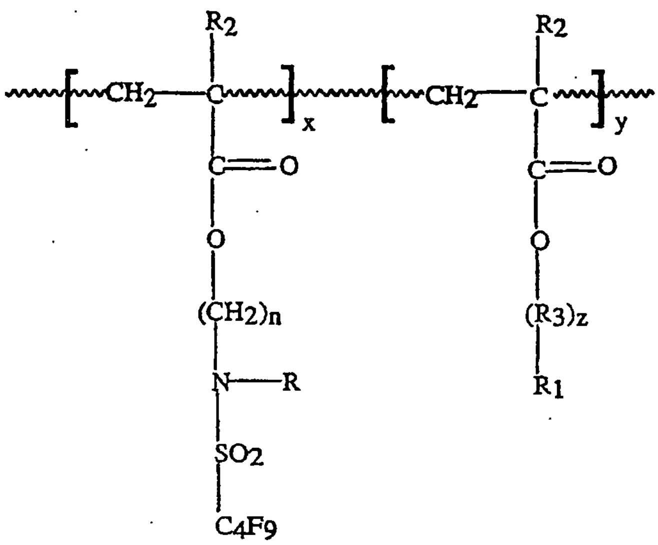

umfasst,
wobei

R, $R_1$ und $R_2$ jeweils unabhängig Wasserstoff- oder Alkylgruppen mit 1 bis 4 Kohlenstoffatomen sind;
$R_3$ eine oder mehrere geradkettige oder verzweigte Polyalkylenoxygruppen mit 2 bis 6 Kohlenstoffatomen in jeder Gruppe umfasst;
n eine ganze Zahl von 2 bis 10 ist; und
x, y und z ganze Zahlen von mindestens 1 sind.

**5.** Tintenzusammensetzung nach Anspruch 4, wobei $R_3$

$$(EO)_p\text{-}(PO)_q\text{-}(EO)_p$$

oder

$$(PO)_q\text{-}(EO)_p\text{-}(PO)_q$$

umfasst, wobei p eine ganze Zahl von 1 bis 128 ist und q eine ganze Zahl von 0 bis 54 ist.

**6.** Tintenzusammensetzung nach Anspruch 5, wobei $R_3$

$$(PO)_q\text{-}(EO)_p\text{-}(PO)_q$$

umfasst, wobei p 17 beträgt und q 0 beträgt.

**7.** Tintenzusammensetzung nach Anspruch 5, wobei $R_3$

$$(EO)_p\text{-}(PO)_q\text{-}(EO)_p$$

umfasst, wobei p eine ganze Zahl von 14 bis 128 ist und q eine ganze Zahl von 9 bis 54 ist.

**8.** Tintenzusammensetzung nach Anspruch 5, wobei p eine ganze Zahl von 7 bis 128 ist und q eine ganze Zahl von 21 bis 54 ist.

**9.** Tintenzusammensetzung nach Anspruch 8, wobei p 11 beträgt und q 21 beträgt.

**10.** Tintenzusammensetzung nach Anspruch 9, wobei die Polymerkette keine anderen Monomereinheiten umfasst.

**11.** Tintenzusammensetzung nach Anspruch 5, wobei die Polymerkette ferner Einheiten umfasst, die von Maleinsäureanhydrid, Acrylnitril, Vinylacetat, Vinylchlorid, Styrol, Methylacrylat, Methylmethacrylat, Ethylen, Isopren, Butadien oder Kombinationen derselben abgeleitet sind.

**12.** Tintenzusammensetzung nach Anspruch 1, wobei das fluorchemische Tensid ein oder mehrere Tenside umfasst, die eine chemische Struktur

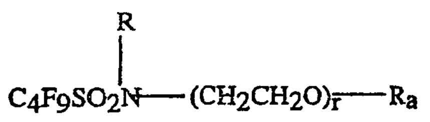

aufweisen,
wobei

R und $R_a$ jeweils unabhängig Wasserstoff- oder Alkylgruppen mit 1 bis 4 Kohlenstoffatomen sind; und
r eine ganze Zahl von 2 bis 20 ist.

**13.** Tintenzusammensetzung nach Anspruch 12, wobei R und $R_a$ jeweils unabhängig Methyl sind und r eine ganze Zahl

von 4 bis 10 ist.

**14.** Tintenzusammensetzung nach Anspruch 1, wobei das Vehikel nichtwässrig ist.

**15.** Tintenzusammensetzung nach Anspruch 1, wobei das Vehikel ein polymerisierbares Material umfasst.

**16.** Tintenzusammensetzung nach Anspruch 15, wobei das polymerisierbare Material radikalpolymerisierbar ist.

**17.** Tintenzusammensetzung nach Anspruch 16, wobei das radikalpolymerisierbare Material mindestens ein Acrylatmonomer und ein Acrylatoligomer umfasst.

**18.** Tintenzusammensetzung nach Anspruch 1, wobei das Vehikel wässrig ist.

**19.** Tintenzusammensetzung nach Anspruch 18, ferner umfassend mindestens ein Feuchthaltemittel und einen Farbmittelstabilisator.

**20.** Tintenzusammensetzung nach Anspruch 1, wobei das fluorchemische Tensid ein Reaktionsprodukt umfasst von:

(a) mindestens einer Verbindung, die die Formel

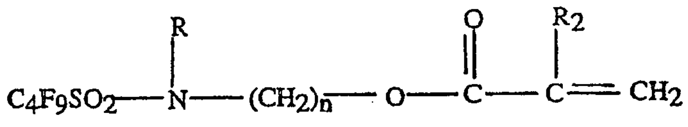

aufweist;
(b) mindestens einer Verbindung, die aus der Gruppe ausgewählt ist, bestehend aus

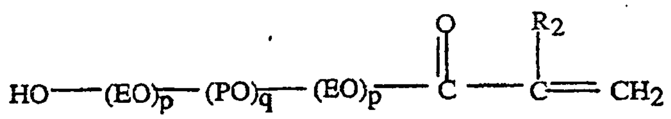 ;

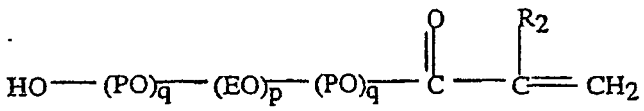 ;

und

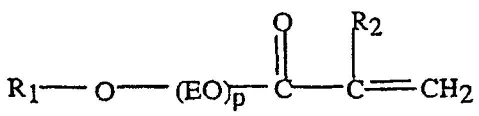 ;

und wahlweise
(c) mindestens einer Verbindung, die die Formel

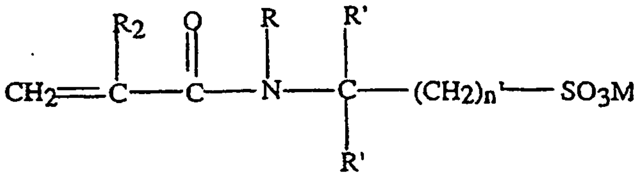

aufweist,
wobei

R, $R_1$, R' und $R_2$ jeweils unabhängig Wasserstoff- oder Alkylgruppen mit 1 bis 4 Kohlenstoffatomen sind;
n eine ganze Zahl von 2 bis 10 ist;
n' eine ganze Zahl von 1 bis 10 ist;
p eine ganze Zahl von 1 bis 128 ist;
q eine ganze Zahl von 0 bis 54 ist; und
M Wasserstoff, ein Metallkation oder ein protoniertes tertiäres Amin ist.

**21.** Tintenstrahltintenzusammensetzung nach Anspruch 1, wobei die Tintenzusammensetzung einen Schaumbeständigkeitstestwert von weniger als 30 % aufweist.

**22.** Tintenstrahltintenzusammensetzung nach Anspruch 21, wobei die Tintenzusammensetzung von silikonhaltigen Tensiden und Entschäumungsmitteln frei ist.

**23.** Verfahren für das Tintenstrahldrucken, umfassend das Ausstoßen der Tintenzusammensetzung nach Anspruch 1 aus einem Tintenstrahldruckerkopf auf ein Substrat.

**24.** Verfahren nach Anspruch 23, ferner umfassend den Schritt des Aussetzens der gedruckten Tinte gegenüber aktinischer Strahlung.

**25.** Verfahren nach Anspruch 24, wobei die aktinische Strahlung Ultraviolettstrahlung umfasst.

**26.** Hergestellter Gegenstand umfassend ein Substrat, das einem Verfahren nach Anspruch 23 gemäß bedruckt ist.

**27.** Gegenstand nach Anspruch 26, wobei das Substrat Holz, Metall, Papier, Gewebe, Vliesstoff, Leder, harzbeschichtetes Papier, Folie, einen Schaum, eine Polymerfolie oder eine Kombination derselben umfasst.

**28.** Gegenstand nach Anspruch 27, wobei das Substrat einzelne und mehrschichtige nichtporöse Polymerfolien aus Poly(vinylchlorid), Polybutylenterephthalat, Polyethylenterephthalat, Acrylnitril-Butadien-StyrolCopolymer, Polystyrol, Polycarbonat, Polyurethan, Epoxid, Polyimid, Polyamid, Polymethyl(meth)acrylat, Polyolefin, Polyamidimid, Polyacrylat, Polyacrylamid, Melaminharzen, Polyvinylbutyral und Copolymeren derselben und Kombinationen derselben umfasst.

**29.** Gegenstand nach Anspruch 27, wobei das Substrat einzelne und mehrschichtige Konstruktionen aus Papier, Karton, Vliesstoff, Gewebe, Leder, mikroporöser Folie und Kombinationen derselben umfasst.

**30.** Gegenstand nach Anspruch 26, wobei der Gegenstand eine Komponente für ein Schild für das Freie, eine Straße, ein Motorfahrzeug, ein Boot, ein Flugzeug oder Möbel umfasst.

**31.** Gegenstand nach Anspruch 30, wobei der Gegenstand einen retroreflektiven Gegenstand umfasst.

**32.** Gegenstand nach Anspruch 31, wobei das Substrat Polymethylmethacrylat umfasst.

**33.** Durch Tintenstrahl aufdruckbare, strahlungsaushärtbare klare Beschichtung, umfassend:

ein Vehikel umfassend ein polymerisierbares Material;
einen Photoinitiator; und

ein fluorchemisches Tensid;

wobei kein Farbmittel vorliegt; und

wobei ferner das fluorchemische Tensid ein oder mehrere Tenside umfasst, die eine oder mehrere chemische Strukturen aufweisen, ausgewählt unter:

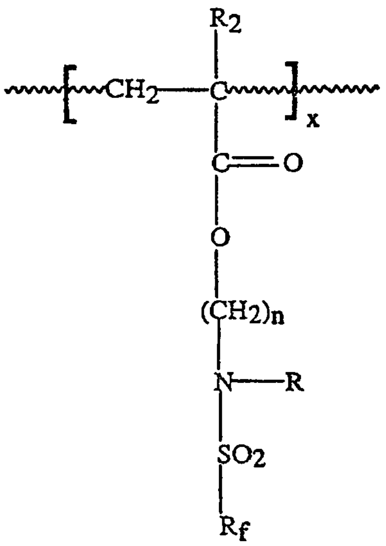

,

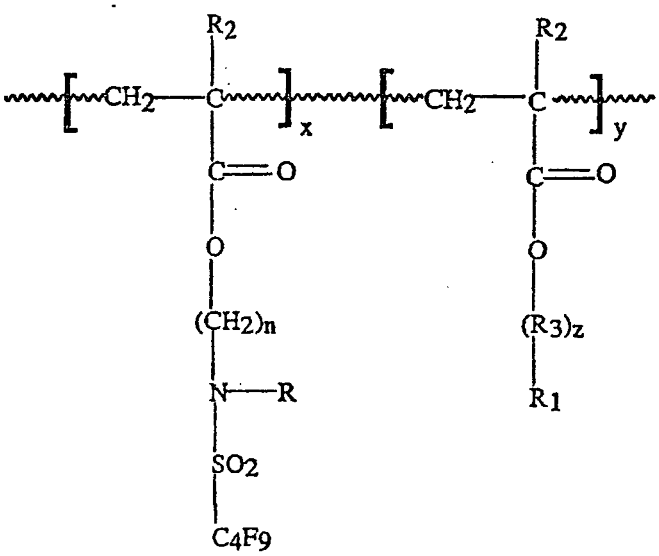

und

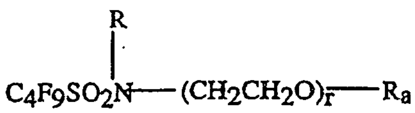

wobei

 eine Bindung in einer Polymerkette darstellt;
$R_f$ $-C_4F_9$ oder $-C_3F_7$ ist;
R, $R_1$, $R_2$ und $R_a$ jeweils unabhängig Wasserstoff- oder Alkylgruppen mit 1 bis 4 Kohlenstoffatomen sind;
$R_3$ eine oder mehrere geradkettige oder verzweigte Polyalkylenoxygruppen mit 2 bis 6 Kohlenstoffatomen in jeder Gruppe umfasst;
n eine ganze Zahl von 2 bis 10 ist;
x, y und z ganze Zahlen von mindestens 1 sind; und r eine ganze Zahl von 2 bis 20 ist.

## Revendications

**1.** Composition d'encre pour jet d'encre comprenant :

un colorant ;
un véhicule ; et
un tensioactif fluoré ;

dans laquelle le tensioactif fluoré comprend un ou plusieurs tensioactifs présentant une ou plusieurs structures chimiques choisies parmi :

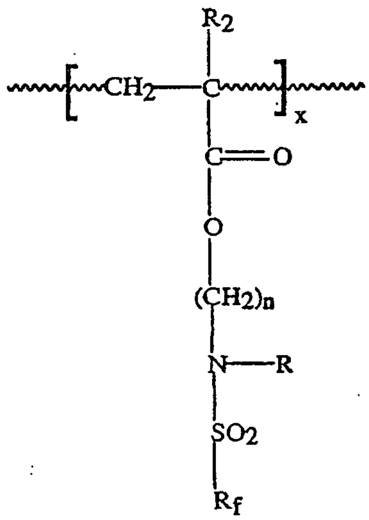
,

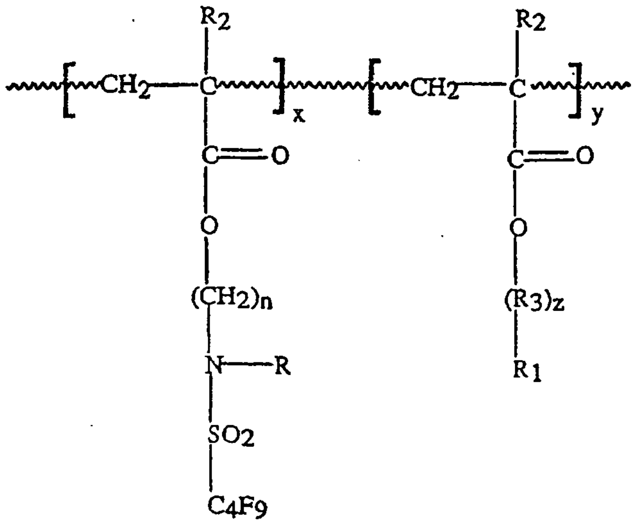

et

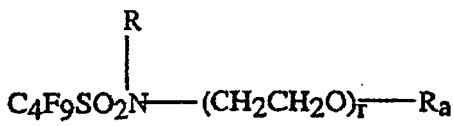

dans lesquelles

 représente une liaison dans une chaîne polymère ;
$R_f$ représente $-C_4F_9$ ou $-C_3F_7$ ;
R, $R_1$, $R_2$ et $R_a$ représentent chacun indépendamment des atomes d'hydrogène ou des groupes alkyle comportant 1 à 4 atomes de carbone ;
$R_3$ comprend un ou plusieurs groupes polyalkylène-oxy linéaires ou ramifiés comportant 2 à 6 atomes de carbone dans chaque groupe ;
n représente un nombre entier de 2 à 10 ;
x, y et z représentent des nombres entiers au moins égaux à 1 ; et
r représente un nombre entier de 2 à 20.

**2.** Composition d'encre selon la revendication 1, dans laquelle le tensioactif fluoré comprend un ou plusieurs tensioactifs polymères présentant une chaîne polymère comprenant un ou plusieurs motifs :

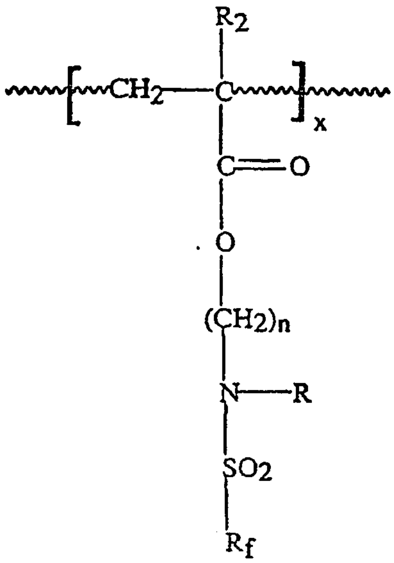

dans lesquels

$R_f$ représente $-C_4F_9$ ou $-C_3F_7$ ;
R et $R_2$ représentent chacun indépendamment des atomes d'hydrogène ou des groupes alkyle comportant 1 à 4 atomes de carbone ;
n représente un nombre entier de 2 à 10 ; et
x représente un nombre entier au moins égal à 1.

**3.** Composition d'encre selon la revendication 2, dans laquelle
$R_f$ représente $-C_4F_9$ ;
R et $R_2$ représentent chacun indépendamment des atomes d'hydrogène ou des groupes méthyle ; et
n est égal à 2.

**4.** Composition d'encre selon la revendication 1, dans laquelle le tensioactif fluoré comprend un ou plusieurs tensioactifs polymères présentant une chaîne polymère comprenant un ou plusieurs motifs :

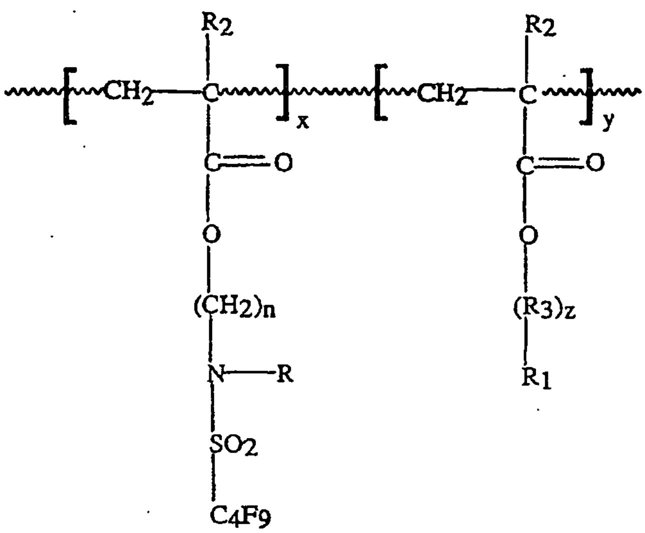

dans lesquels

R, $R_1$ et $R_2$ représentent chacun indépendamment des atomes d'hydrogène ou des groupes alkyle comportant 1 à 4 atomes de carbone ;
$R_3$ comprend un ou plusieurs groupes polyalkylène-oxy linéaires ou ramifiés comportant 2 à 6 atomes de carbone dans chaque groupe ;
n représente un nombre entier de 2 à 10 ; et
x, y et z représentent des nombres entiers au moins égaux à 1.

**5.** Composition d'encre selon la revendication 4, dans laquelle $R_3$ comprend

$$(EO)_p\text{-}(PO)_q\text{-}(EO)_p$$

ou

$$(PO)_q\text{-}(EO)_p\text{-}(PO)_q$$

où p représente un nombre entier de 1 à 128 et q représente un nombre entier de 0 à 54.

**6.** Composition d'encre selon la revendication 5, dans laquelle $R_3$ comprend

$$(PO)_q\text{-}(EO)_p\text{-}(PO)_q$$

où p est égal à 17 et q est égal à 0.

**7.** Composition d'encre selon la revendication 5, dans laquelle $R_3$ comprend

$$(EO)_p\text{-}(PO)_q\text{-}(EO)_p$$

où p représente un nombre entier de 14 à 128 et q représente un nombre entier de 9 à 54.

**8.** Composition d'encre selon la revendication 5, dans laquelle p représente un nombre entier de 7 à 128 et q représente un nombre entier de 21 à 54.

**9.** Composition d'encre selon la revendication 8, dans laquelle p est égal à 11 et q est égal à 21.

**10.** Composition d'encre selon la revendication 9, dans laquelle la chaîne polymère ne comprend pas d'autres motifs monomères.

**11.** Composition d'encre selon la revendication 5, dans laquelle la chaîne polymère comprend en outre des motifs dérivés de l'anhydride maléique, de l'acrylonitrile, de l'acétate de vinyle, du chlorure de vinyle, du styrène, de l'acrylate de méthyle, du méthacrylate de méthyle, de l'éthylène, de l'isoprène, du butadiène, ou leurs combinaisons.

**12.** Composition d'encre selon la revendication 1, dans laquelle le tensioactif fluoré comprend un ou plusieurs tensioactifs présentant une structure chimique

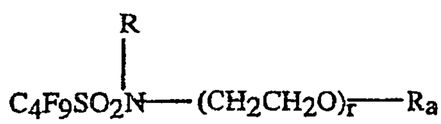

dans laquelle

R et $R_a$ représentent chacun indépendamment des atomes d'hydrogène ou des groupes alkyle comportant 1 à 4 atomes de carbone ; et
r représente un nombre entier de 2 à 20.

**13.** Composition d'encre selon la revendication 12, dans laquelle R et $R_a$ représentent chacun indépendamment des groupes méthyle et r représente un nombre entier de 4 à 10.

**14.** Composition d'encre selon la revendication 1, dans laquelle le véhicule est non aqueux.

**15.** Composition d'encre selon la revendication 1, dans laquelle le véhicule comprend un matériau polymérisable.

**16.** Composition d'encre selon la revendication 15, dans laquelle le matériau polymérisable est polymérisable par voie radicalaire.

**17.** Composition d'encre selon la revendication 16, dans laquelle le matériau polymérisable par voie radicalaire comprend au moins un composé parmi un monomère acrylate et un oligomère d'acrylate.

**18.** Composition d'encre selon la revendication 1, dans laquelle le véhicule est aqueux.

**19.** Composition d'encre selon la revendication 18 comprenant en outre au moins un composé parmi un humectant et un stabilisant de colorant.

**20.** Composition d'encre selon la revendication 1, dans laquelle le tensioactif fluoré comprend un produit de réaction :

(a)d'au moins un composé répondant à la formule

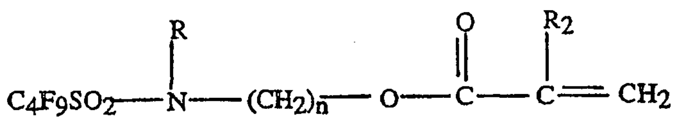
;

(b)au moins un composé choisi dans le groupe constitué par

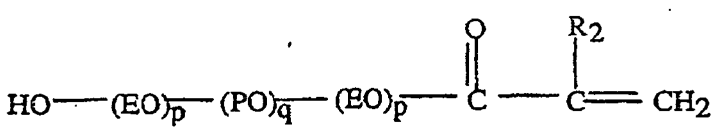
;

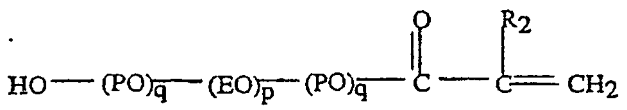
;

et

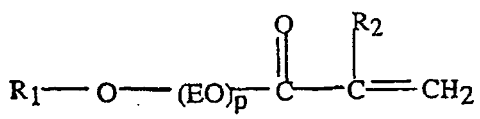
;

et éventuellement
(c) d'au moins un composé répondant à la formule

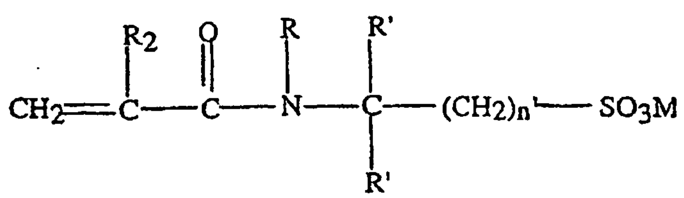

formules dans lesquelles

R, $R_1$, R' et $R_2$ représentent chacun indépendamment un atome d'hydrogène ou un groupe alkyle comportant de 1 à 4 atomes de carbone ;
n représente un nombre entier de 2 à 10 ;
n' représente un nombre entier de 1 à 10 ;
p représente un nombre entier de 1 à 128 ;
q représente un nombre entier de 0 à 54 ; et
M représente un atome d'hydrogène, un cation métallique ou une amine tertiaire protonée.

**21.** Composition d'encre pour jet d'encre selon la revendication 1, dans laquelle la composition d'encre présente une valeur dans l'essai de stabilité de la mousse inférieure à 30 %.

**22.** Composition d'encre pour jet d'encre selon la revendication 21, dans laquelle la composition d'encre est dépourvue de tensioactifs et d'antimousses contenant une silicone.

**23.** Procédé d'impression par jet d'encre consistant à éjecter la composition d'encre selon la revendication 1 de la tête d'une imprimante à jet d'encre sur un substrat.

**24.** Procédé selon la revendication 23 comprenant en outre l'étape consistant à exposer l'encre imprimée à un rayonnement actinique.

**25.** Procédé selon la revendication 24, dans lequel le rayonnement actinique comprend un rayonnement ultraviolet.

**26.** Article manufacturé comprenant un substrat imprimé conformément au procédé selon la revendication 23.

**27.** Article selon la revendication 26, dans lequel le substrat comprend du bois, du métal, du papier, du tissu tissé, du tissu non tissé, du cuir, du papier couché de résine, une feuille, une mousse, un film de polymère, ou une combinaison de ceux-ci.

**28.** Article selon la revendication 27, dans lequel le substrat comprend des films de polymère non poreux monocouches et multicouches de poly(chlorure de vinyle), de poly(butylène téréphtalate), de poly-(éthylène téréphtalate), de copolymère acrylonitrile-butadiène-styrène, de polystyrène, de polycarbonate, de polyuréthane, d'époxy, de polyimide, de polyamide, de poly((méth)acrylate de méthyle), de polyoléfine, de polyamide-imide, de polyacrylate, de polyacrylamide, de résines mélamine, de polyvinylbutyral, et leurs copolymères, et leurs combinaisons.

**29.** Article selon la revendication 27, dans lequel le substrat comprend des constructions monocouches et multicouches de papier, de carton, de tissu non tissé, de tissu tissé, de cuir, de film microporeux, et leurs combinaisons.

**30.** Article selon la revendication 26, dans lequel l'article comprend un composant pour panneau de signalisation extérieur, route, véhicule à moteur, bateau, avion ou meuble.

**31.** Article selon la revendication 30, dans lequel l'article comprend un article rétroréfléchissant.

**32.** Article selon la revendication 31, dans lequel le substrat comprend du poly(méthacrylate de méthyle).

**33.** Revêtement clair durcissable par un rayonnement, pouvant être utilisé dans une imprimante à jet d'encre, comprenant :

un véhicule comprenant un matériau polymérisable ;
un photo-amorceur ; et
un tensioactif fluoré ;

dans lequel aucun colorant n'est présent ; et
dans lequel, en outre, le tensioactif fluoré comprend un ou plusieurs tensioactifs présentant une ou plusieurs structures chimiques choisies parmi :

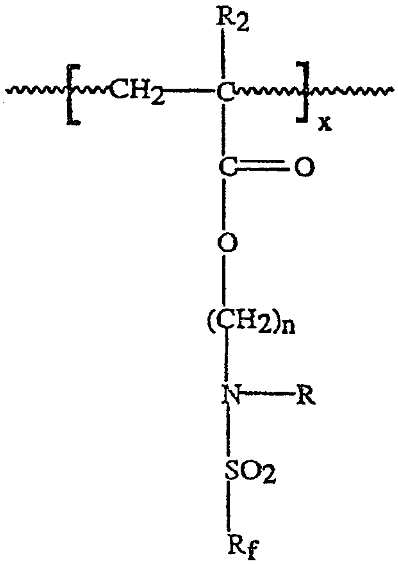

,

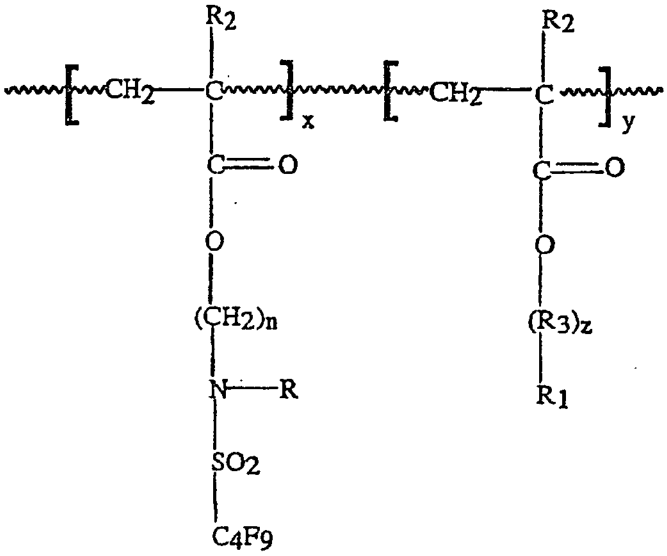

et

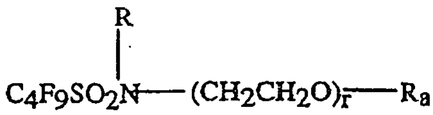

dans lesquelles

-  représente une liaison dans une chaîne polymère ;
- $R_f$ représente $-C_4F_9$ ou $-C_3F_7$ ;
- R, $R_1$, $R_2$ et $R_a$ représentent chacun indépendamment des atomes d'hydrogène ou des groupes alkyle comprenant 1 à 4 atomes de carbone ;
- $R_3$ comprend un ou plusieurs groupes polyalkylène-oxy linéaires ou ramifiés comportant 2 à 6 atomes de carbone dans chaque groupe ;
- n représente un nombre entier de 2 à 10 ;
- x, y et z représentent des nombres entiers au moins égaux à 1 ; et

r représente un nombre entier de 2 à 20.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2803615 A
- US 3787351 A
- US 2732398 A, Brice
- WO 0130873 A
- US 5840106 A
- US 5714632 A
- WO 0020521 A1
- US 5086086 A
- US 6558753 B, Ylitalo
- US 2002085054 A, Tokie
- US 3728151 A
- US 6113679 A


### Non-patent literature cited in the description


- THE COLOUR INDEX. The Society of Dyers and Colourists, 1971, vol. 1-9